# EUROPEAN PATENT APPLICATION

(11) **EP 2 779 083 A1**
(43) Date of publication of application: **17.09.2014**
(21) Application number: 12846735.4
(22) Date of filing: 05.10.2012
(51) Int. Cl.: G06Q 50/06, G06Q 20/06, H02J 3/00

(54) **INFORMATION PROCESSING DEVICE, SERVER DEVICE, ELECTRIC POWER TRANSACTION SETTLEMENT SYSTEM, SETTLEMENT METHOD FOR ELECTRIC POWER TRANSACTION, AND INFORMATION PROCESSING METHOD**

(30) Priority: 31.10.2011 JP 2011238410
(71) Applicant: Sony Corporation, Tokyo 108-0075 (JP)
(72) Inventor: PAN, Jin, Tokyo 108-0075 (JP)
(74) Representative: Lewis, Darren John
(86) International application number: PCT/JP2012/075927
(87) International publication number: WO 2013/065446

(57) **Abstract**

Provided is an information processing apparatus including a read/write unit configured so as to be capable of reading, via contactless communication, electronic money information from an IC card capable of storing the electronic money information or an electronic appliance equipped with functions of the IC card and of writing the electronic money information into the IC card or the electronic appliance, and a settlement processing unit configured to write electronic money information of a fee in accordance with a power sale amount via the read/write unit into the IC card or the electronic appliance immediately after conclusion of a power sale contract.

## Description

### Technical Field

The present technology relates to an information processing apparatus, an server apparatus, a power trading settlement system, a settlement method for power trading, and an information processing method.

### Background Art

Peoples' interest in renewable energy has been increasing due to increasing awareness about protection of the global environment and a sense of crisis regarding the depletion of fossil fuels. Hydro, geothermal, sunlight, solar thermal, tidal, wind, and biomass are all examples of energy sources of renewable energy. This means that renewable energy can be generated while producing hardly any greenhouse gases. In response to such increased interest in renewable energy, there have been moves to recognize the additional benefit of renewable energy. For example, there are green power certificates that certify the environmental value of power (hereinafter "green power) generated using renewable energy. In Patent Literature 1 given below, a framework for constructing a green power market in which individuals and small power consumers can participate is disclosed.

### Citation List

### Patent Literature

Patent Literature 1: JP 2003-108655A

### Summary of Invention

### Technical Problem

However, a framework for easily selling green power generated by households and ordinary businesses has not been realized. For example, to sell power generated using solar photovoltaic panels at the home, it is necessary to sign a power sale contract with a power company having decided a certain power sale period. Also, the power sale price is set at a fee unilaterally decided by the power company. In addition, the payment of compensation for a power sale is never conducted at the time of the power sale. That is, the present situation is not a situation where individuals or small power consumers can easily obtain compensation for the sale of green power. As a result, the scale of the market for green power is not expanding at all and there has been no progress in the active use of renewable energy in homes and ordinary businesses or in the introduction of power generation equipment that uses renewable energy.

The present technology was conceived in view of the situation described above and aims to provide a novel and improved information processing apparatus, server apparatus, power trading settlement system, settlement method for power trading, and information processing method that make it possible to acquire compensation for the sale of power easily and in real time.

### Solution to Problem

According to an embodiment of the present technology, there is provided an information processing apparatus including a read/write unit configured so as to be capable of reading, via contactless communication, electronic money information from an IC card capable of storing the electronic money information or an electronic appliance equipped with functions of the IC card and of writing the electronic money information into the IC card or the electronic appliance, and a settlement processing unit configured to write electronic money information of a fee in accordance with a power sale amount via the read/write unit into the IC card or the electronic appliance immediately after conclusion of a power sale contract.

Further, according to another embodiment of the present technology, there is provided a server apparatus including a contract processing unit configured to carry out processing relating to a power sale contract with an information processing apparatus, the information processing apparatus including a read/write unit configured so as to be capable of reading, via contactless communication, electronic money information from an IC card capable of storing the electronic money information or an electronic appliance equipped with functions of the IC card and of writing the electronic money information into the IC card or the electronic appliance, and a settlement processing unit configured to write electronic money information of a fee in accordance with a power sale amount via the read/write unit into the IC card or the electronic appliance immediately after conclusion of the power sale contract. The contract processing unit is operable when the power sale contract has been concluded, to permit the information processing apparatus to carry out a write of electronic money information into the IC card or the electronic appliance.

Further, according to another embodiment of the present technology, there is provided a power trading settlement system including an information processing apparatus including a read/write unit configured so as to be capable of reading, via contactless communication, electronic money information from an IC card capable of storing the electronic money information or an electronic appliance equipped with functions of the IC card and of writing the electronic money information into the IC card or the electronic appliance, and a settlement processing unit configured to write electronic money information of a fee in accordance with a power sale amount via the read/write unit into the IC card or the electronic appliance immediately after conclusion of a power sale contract, and a server apparatus including a contract processing unit configured to carry out processing relating to the power sale contract with the information processing apparatus and operable when the power sale contract has been concluded, to permit the information processing apparatus to carry out a write of electronic money information into the IC card or the electronic appliance.

Further, according to another embodiment of the present technology, there is provided a power trading settlement method including writing, via a read/write unit capable of reading, via contactless communication, electronic money information from an IC card capable of storing the electronic money information or an electronic appliance equipped with functions of the IC card and of writing the electronic money information into the IC card or the electronic appliance, electronic money information of a fee in accordance with a power sale amount into the IC card or the electronic appliance immediately after conclusion of a power sale contract.

Further, according to another embodiment of the present technology, there is provided an information processing method including writing, by way of an information processing apparatus including a read/write unit capable of reading, via contactless communication, electronic money information from an IC card capable of storing the electronic money information or an electronic appliance equipped with functions of the IC card and of writing the electronic money information into the IC card or the electronic appliance, electronic money information of a fee in accordance with a power sale amount via the read/write unit into the IC card or the electronic appliance immediately after conclusion of a power sale contract.

Further, according to another embodiment of the present technology, there is provided an information processing method including permitting, by way of a server apparatus that carries out processing relating to a power sale contract with an information processing apparatus including a read/write unit configured so as to be capable of reading, via contactless communication, electronic money information from an IC card capable of storing the electronic money information or an electronic appliance equipped with functions of the IC card and of writing the electronic money information into the IC card or the electronic appliance, and a settlement processing unit configured to write electronic money information of a fee in accordance with a power sale amount via the read/write unit into the IC card or the electronic appliance immediately after conclusion of the power sale contract, the information processing apparatus to carry out a write of electronic money information into the IC card or the electronic appliance when the power sale contract has been concluded.

### Advantageous Effects of Invention

According to the present technology described above, it becomes possible to acquire compensation for the sale of power easily and in real time.

### Brief Description of Drawings

[FIG. 1] FIG. 1 is an explanatory diagram for explaining an example system configuration according to a first embodiment of the present technology.
[FIG. 2] FIG. 2 is an explanatory diagram for explaining the functional configuration of a power management apparatus according to the same embodiment.
[FIG. 3] FIG. 3 is an explanatory diagram showing an example of information held when the power management apparatus according to the same embodiment has concluded a power sale contract.
[FIG. 4] FIG. 4 is an explanatory diagram for explaining the functional configuration of a power sale settlement system according to the same embodiment.
[FIG. 5] FIG. 5 is an explanatory diagram showing an example of information held when the power sale settlement system according to the same embodiment has concluded a power sale contract.
[FIG. 6] FIG. 6 is an explanatory diagram for explaining a processing sequence during a power sale in the system according to the same embodiment.
[FIG. 7] FIG. 7 is an explanatory diagram for explaining a processing sequence during a power sale in the system according to the same embodiment.
[FIG. 8] FIG. 8 is an explanatory diagram for explaining a processing sequence during reverse flow in the system according to the same embodiment.
[FIG. 9] FIG. 9 is an explanatory diagram for explaining a reverse flow period and a modification of the power sale contract according to the same embodiment.
[FIG. 10] FIG. 10 is an explanatory diagram for explaining a reverse flow period and a modification of the power sale contract according to the same embodiment.
[FIG. 11] FIG. 11 is an explanatory diagram for explaining a reverse flow period and a modification of the power sale contract according to the same embodiment.
[FIG. 12] FIG. 12 is an explanatory diagram for explaining a reverse flow period and a modification of the power sale contract according to the same embodiment.
[FIG. 13] FIG. 13 is an explanatory diagram for explaining a modification of the power sale contract according to the same embodiment and a processing sequence of the system when such modification is used.
[FIG. 14] FIG. 14 is an explanatory diagram for explaining an example system configuration according to a second embodiment of the present technology.
[FIG. 15] FIG. 15 is an explanatory diagram for explaining the functional configuration of a power storage apparatus according to the same embodiment.
[FIG. 16] FIG. 16 is an explanatory diagram for explaining a processing sequence during a power sale in the system according to the same embodiment.
[FIG. 17] FIG. 17 is an explanatory diagram for explaining a processing sequence during a power sale in the system according to the same embodiment.
[FIG. 18] FIG. 18 is an explanatory diagram for explaining a processing sequence during reverse flow in the system according to the same embodiment.
[FIG. 19] FIG. 19 is an explanatory diagram for explaining an example system configuration according to a third embodiment of the present technology.
[FIG. 20] FIG. 20 is an explanatory diagram for explaining the functional configuration of an electric vehicle according to the same embodiment.
[FIG. 21] FIG. 21 is an explanatory diagram for explaining a processing sequence during a power sale in the system according to the same embodiment.
[FIG. 22] FIG. 22 is an explanatory diagram for explaining a processing sequence during a power sale in the system according to the same embodiment.
[FIG. 23] FIG. 23 is an explanatory diagram for explaining a processing sequence during reverse flow in the system according to the same embodiment.
[FIG. 24] FIG. 24 is an explanatory diagram for explaining an example hardware configuration capable of realizing control functions and computational processing functions of the respective structural elements according to the first to third embodiments of the present technology.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

### Flow of Description

The flow of the following description is stated here in brief.

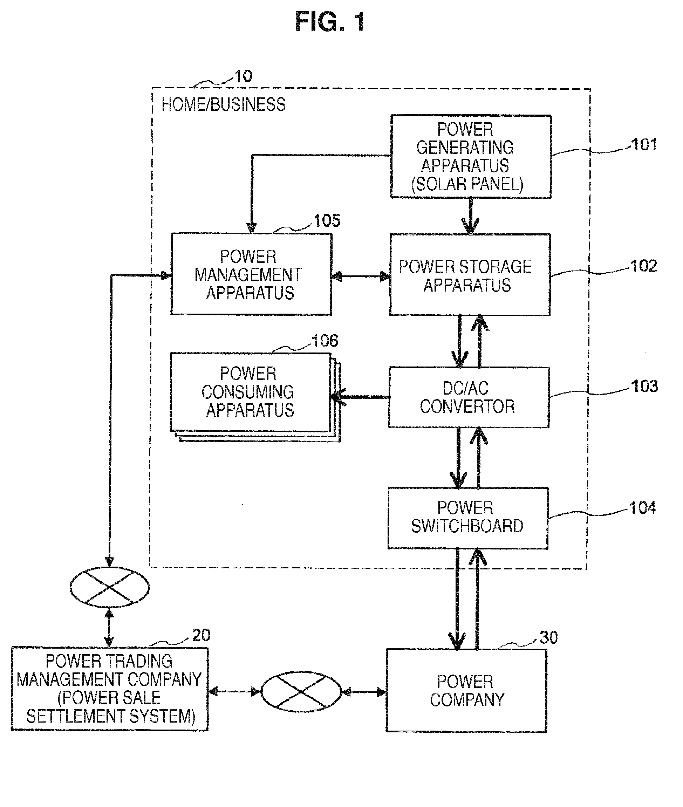

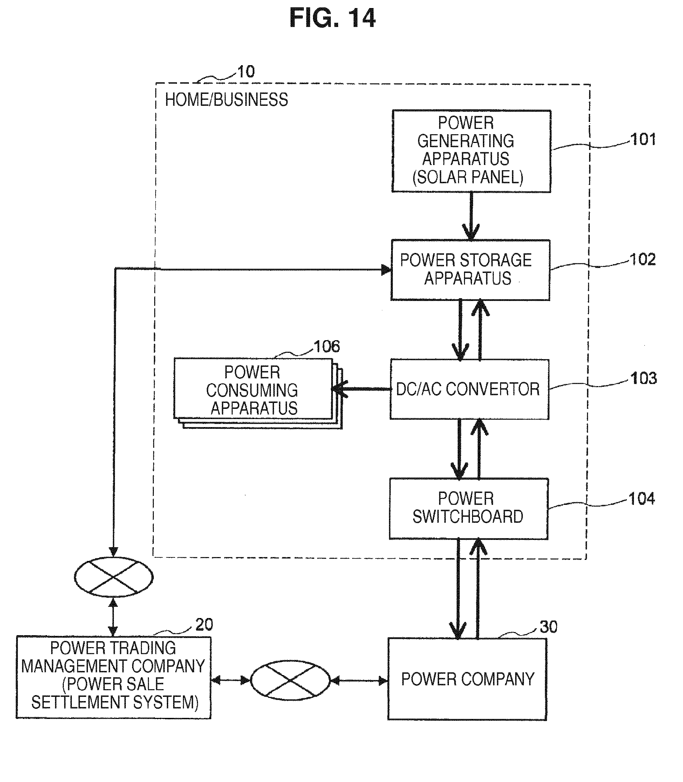

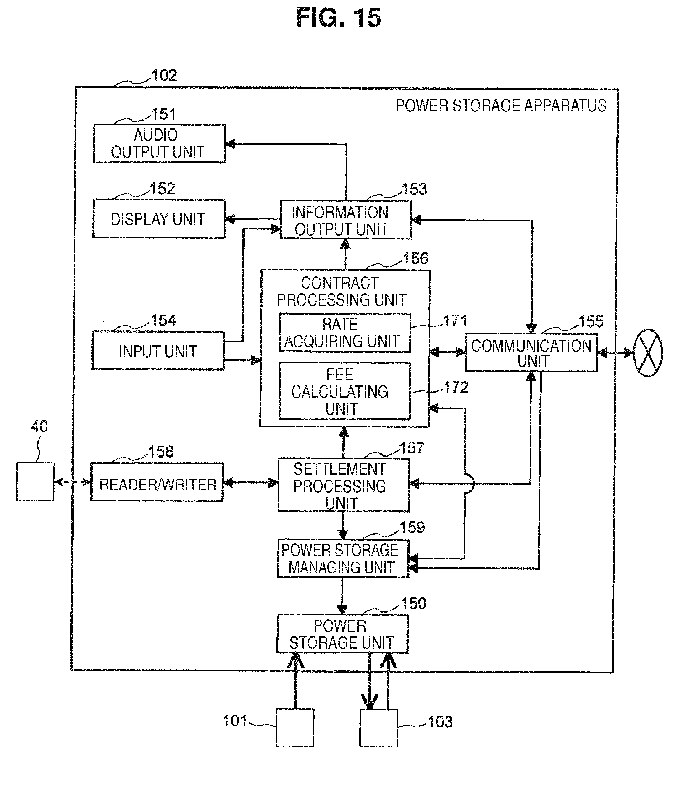

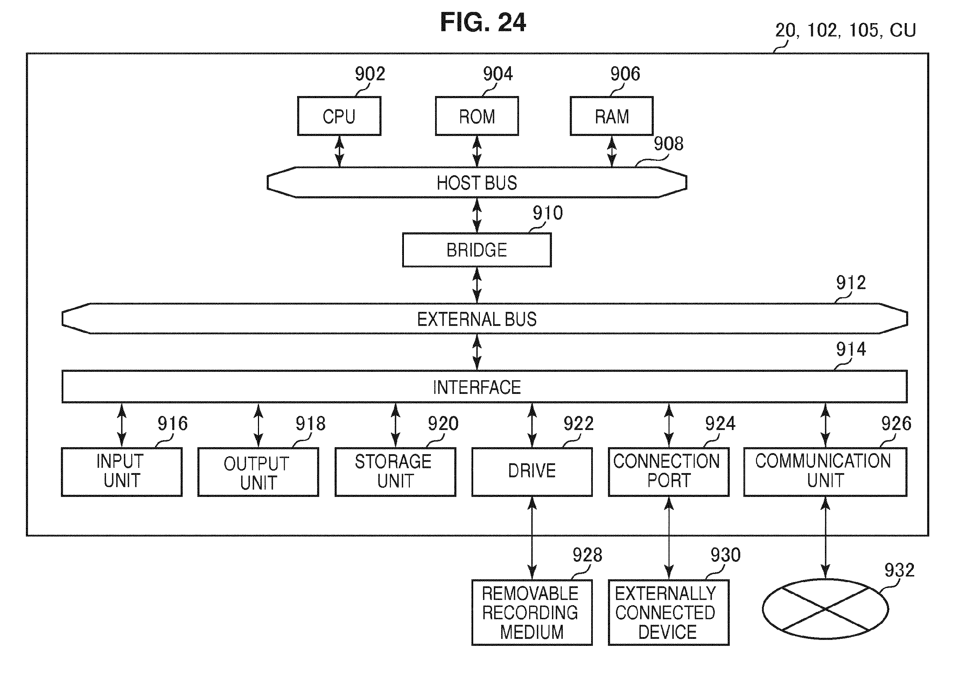

First, the configuration and operation of a system according to a first embodiment of the present technology will be described with reference to FIG. 1 to FIG. 13. Next, the configuration and operation of a system according to a second embodiment of the present technology will be described with reference to FIG. 14 to FIG. 18. Next, the configuration and operation of a system according to a third embodiment of the present technology will be described with reference to FIG. 15 to FIG. 23. Next, an example hardware configuration capable of realizing the control functions and computational processing functions of the respective structural elements according to the first to third embodiments of the present technology will be described with reference to FIG. 24. Finally, the technical scope of such embodiments will be reviewed and the operational effects obtained by such technical scope will be described in brief.

### (Description Sections)

1: Introduction
2: First Embodiment (Principal Agent of Settlement Process = Power Management Apparatus)
   2-1: System Configuration
   2-2: Apparatus Configuration
      2-2-1: Power Management Apparatus
      2-2-2: Power Sale Settlement System
   2-3: Sequence of Settlement Process
   2-4: Sequence of Reverse Flow Process
   2-5: Reverse Flow Period
3: Second Embodiment (Principal Agent of Settlement Process = Power Storage Apparatus)
   3-1: System Configuration
   3-2: Apparatus Configuration (Power Storage Apparatus)
   3-3: Sequence of Settlement Process
   3-4: Sequence of Reverse Flow Process
4: Third Embodiment (Principal Agent of Settlement Process = Electric Vehicle)
   4-1: System Configuration
   4-2: Apparatus Configuration (Electric Vehicle)
   4-3: Sequence of Settlement Process
   4-4: Sequence of Reverse Flow Process
5: (Supplement) Example Configuration of IC Card
   5-1: Structure of Storage Region
   5-2: Circuit Configuration
6: Example Hardware Configuration
7: Conclusion

### 1: Introduction

First, an overview of a system according to an embodiment of the present technology will be described in brief. This system realizes a framework that uses an IC (Integrated Circuit) card capable of contactless communication or an electronic appliance equipped with an IC card function to make settlements for power trading. Note that the IC card that is imagined for use in this system is not a settlement card based on credit information (a trust relationship between a financial institution and the individual tied to the card) such as a credit card or a cash card, but is instead a card that stores electronic money information in a secure memory and carries out settlements by increasing or decreasing the amount shown by the electronic money information.

Although it is also possible of course to use an IC card where the function of a credit card or cash card and a settlement function using electronic money are integrated, the function used here is the settlement function using electronic money. Such settlement function using electronic money can be used even without a trust relationship between the individual and the financial institution who use such function. This means that it is possible to obtain compensation for a power sale more easily. The system also has a framework where compensation for a power sale is obtained in real time. Example system configurations capable of realizing such frameworks are introduced below.

### 2: First Embodiment (Principal Agent of Settlement Process = Power Management Apparatus)

A first embodiment according to the present technology will now be described.

### 2-1: System Configuration (FIG. 1)

First, an example configuration of the system according to the present embodiment will be described with reference to FIG. 1. FIG. 1 is an explanatory diagram showing one example configuration of the system according to the present embodiment.

As shown in FIG. 1, the system according to the present embodiment mainly includes a power management system constructed in a home/business 10, a power sale settlement system 20 operated by a power trading management company, and the system of a power company 30. The power management system constructed at the home/business 10 includes a power generating apparatus 101, a power storage apparatus 102, a DC/AC convertor 103, a power switchboard 104, a power management apparatus 105, power consuming apparatuses 106, and the like. Note that the power management apparatus 105 is connected via a network to the power sale settlement system 20. Also, the power sale settlement system 20 is connected via a network to the system of the power company 30.

Solar photovoltaic equipment (photovoltaic panels), wind power generating equipment, geothermal power generating equipment, solar thermal power generating equipment, tidal power generating equipment, and biomass power generating equipment are examples of the power generating apparatus 101. A storage battery, a capacitor, and a power storage system are examples of the power storage apparatus 102. In addition, a lithium-ion battery, a nickel-metal hydride battery, a lead-acid battery, and a NAS (sodium-sulfur) battery are examples of storage batteries. An electrolytic capacitor, a ceramic capacitor, and an electric double layer capacitor are examples of capacitors.

The power generated by the power generating apparatus 101 is supplied to the power storage apparatus 102 and is stored in the power storage apparatus 102. The power stored in the power storage apparatus 102 is supplied via the DC/AC convertor 103 to the power consuming apparatuses 106. As examples, the power consuming apparatuses 106 are electric appliances such as a household appliance, air conditioning equipment, an OA appliance, or a computer. The battery charger of an electric car or an electric bicycle is also one type of power consuming apparatus 106. Many of such power consuming apparatuses 106 are designed so as to be usable when connected to an AC power supply. For this reason, when using a DC current outputted from the power storage apparatus 102, it is necessary to use the DC/AC convertor 103 to convert the DC current to an AC current.

Grid power lines that join the power company 30 to the home/business 10 are also designed to carry AC current. For this reason, if there is reverse flow of power stored in the power storage apparatus 102 to the power company 30, it is necessary to convert the DC current outputted from the power storage apparatus 102 to an AC current. Note that the expression "reverse flow" refers to the supplying of power toward a power supplier such as the power company 30. More specifically, a DC current outputted from the power storage apparatus 102 is converted to an AC current by the DC/AC convertor 103 and is supplied via the power switchboard 104 to the power company 30. Also, the amount of power of the reverse flow, the timing of the reverse flow, and the like are managed by the power management apparatus 105.

As described above, the power stored in the power storage apparatus 102 is consumed inside the home/business 10 by the power consuming apparatuses 106 or reverse flows to the power company 30. Management of the power consumption state and charging/discharging of the power storage apparatus 102 is carried out by the power management apparatus 105. As one example, the power management apparatus 105 monitors the power generation state of the power generating apparatus 101. The power management apparatus 105 also monitors the power storage state of the power storage apparatus 102. In addition, the power management apparatus 105 displays information on the power generation state, the power storage state, and the like on a screen and/or and outputs such information as audio.

The power management apparatus 105 controls charging and discharging of the power storage apparatus 102. As examples, in accordance with a power sale contract concluded with the power sale settlement system 20, the power management apparatus 105 carries out discharging of the power storage apparatus 102 in response to a request for reverse flow made by the power sale settlement system 20 and suppresses the amount of discharging so that the stored amount of power in the power storage apparatus 102 does not fall below an amount of power reserved for a power sale. The specific method for such charging and discharging control will be described in detail later. Note that the power management apparatus 105 may be provided with a function for controlling charging and discharging of the power storage apparatus 102 to achieve a favorable stored amount of power based on time zone information such as day or night, environment information such as a weather forecast, and/or market information such as a power sale rate.

This completes the description of an example configuration of the system according to the present embodiment.

### 2-2: Apparatus Configuration

Next, the functional configuration of the power management apparatus 105 and the power sale settlement system 20 that construct the system according to the present embodiment will be described in detail.

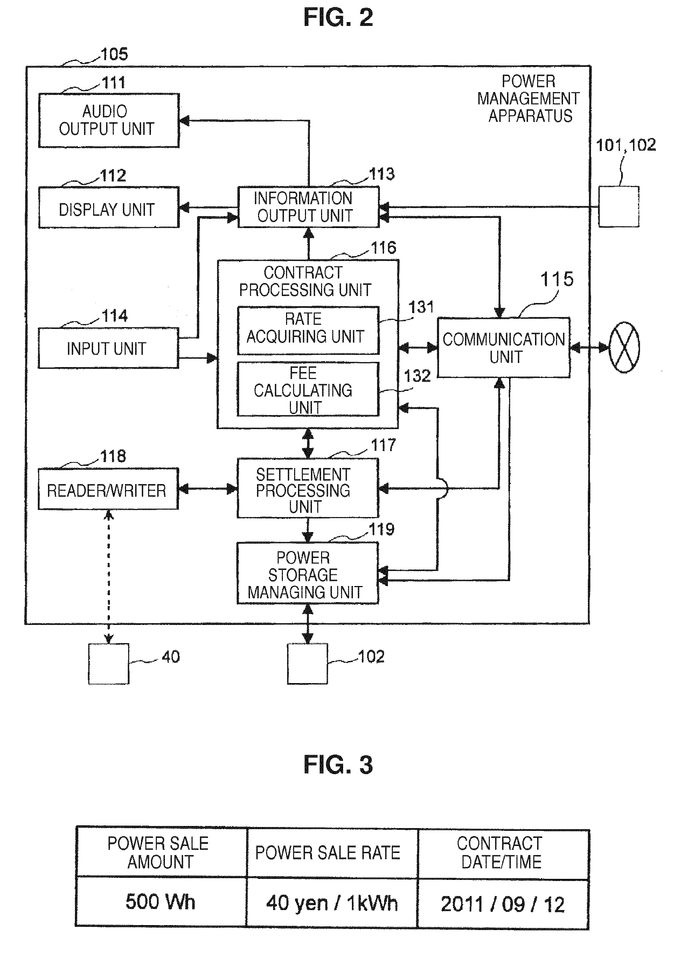

### 2-2-1: Power Management Apparatus (FIG. 2, FIG. 3)

First, the functional configuration of the power management apparatus 105 will be described in more detail with reference to FIG. 2. FIG. 2 is an explanatory diagram showing an example functional configuration of the power management apparatus 105.

As shown in FIG. 2, the power management apparatus 105 mainly includes an audio output unit 111, a display unit 112, an information output unit 113, an input unit 114, a communication unit 115, a contract processing unit 116, a settlement processing unit 117, a reader/writer 118, and a power storage managing unit 119. The contract processing unit 116 includes a rate acquiring unit 131 and a fee calculating unit 132.

The audio output unit 111 is an audio device that outputs audio. The display unit 112 is a display device that displays information. As the display unit 112, it is possible to use a display device such as an LCD (Liquid Crystal Display) or an ELD (Electro-Luminescence Display). The information output unit 113 outputs information as audio using the audio output unit 111 and/or outputs information as images and text using the display unit 112. Examples of the information outputted by the information output unit 113 are the amount of power generated by the power generating apparatus 101, the stored amount of power of the power storage apparatus 102, a weather forecast, the power sale rate, information relating to a power sale contract, information used for operations (a GUI), the date/time, and the amount of consumed power.

Based on the information outputted by the information output unit 113, the user makes decisions relating to power sale contracts and makes settings relating to charging and discharging control of the power storage apparatus 102. At such time, the user inputs information into the power management apparatus 105 using the input unit 114. As examples of the input unit 114, it is possible to use an input device such as a touch panel, a touch pad, a button or buttons, a lever or levers, a keyboard, a mouse, or a trackball. However, when a touch panel is used as the input unit 114, the display unit 112 and the input unit 114 are integrally formed. Note that when information has been inputted via the input unit 114, the inputted information is inputted into the information output unit 113, the contract processing unit 116, and the like.

The communication unit 115 is a communication device that is capable of communicating via a network with at least the power sale settlement system 20. As examples, the communication unit 115 is a communication device that is capable of communication using a communication device such as a wireless LAN, a wired LAN, a telephone landline, a mobile telephone line, optical fibers, an ADSL, and power line communication. As examples, the information output unit 113 acquires a weather forecast and the power sale rate via the communication unit 115 and displays on the display unit 112. Also, the contract processing unit 116, described later, acquires the power sale rate via the communication unit 115 and exchanges information with the power sale settlement system 20. In addition, the settlement processing unit 117 and the power storage managing unit 119, described later, also exchange information with the power sale settlement system 20 via the communication unit 115.

The contract processing unit 116 carries out processing for concluding a power sale contract with the power sale settlement system 20. When the user makes an operation to start a power sale via the input unit 114, the contract processing unit 116 first uses the functions of the rate acquiring unit 131 to acquire the power sale rate at the present time via the communication unit 115 from a power trading market or the power company 30. The contract processing unit 116 displays the amount of sellable power and information urging the user to input the power sale amount on the display unit 112. As one example, the amount of sellable power is the amount of power produced by subtracting power sale amounts that have already been determined by power sale contracts from the stored amount of power in the power storage apparatus 102.

Once the user has inputted the power sale amount via the input unit 114, the contract processing unit 116 uses the functions of the fee calculating unit 132 to calculate the power sale fee based on the power sale rate and the power sale amount. Note that the contract processing unit 116 may be configured so as to use the functions of the fee calculating unit 132 to calculate the power sale fee by subtracting a commission to be paid to the power sale settlement system 20 or the power company 30 when power is sold. Once the power sale fee has been calculated, the contract processing unit 116 displays the calculated power sale fee on the display unit 112. The contract processing unit 116 may be configured to display the fee of the commission together with the power sale fee on the display unit 112 at such time. Also, the contract processing unit 116 requests the user to input whether to conclude a power sale contract at the power sale fee displayed on the display unit 112.

If the user has indicated the wish to conclude a power sale contract via the input unit 114, the contract processing unit 116 transmits contract information (see FIG. 3) including information such as the power sale amount, the power sale rate, and the contract date/time via the communication unit 115 to the power sale settlement system 20. If a response indicating the conclusion of a power sale contract with the content of the transmitted contract information has been received from the power sale settlement system 20, the contract processing unit 116 displays information showing that the concluding of a power sale contract has succeeded on the display unit 112 and stores the contract information transmitted to the power sale settlement system 20 in a recording apparatus (not shown). In addition, the contract processing unit 116 inputs information on the power sale fee into the settlement processing unit 117. The contract processing unit 116 then displays information urging the user to pass an IC card 40 over the reader/writer 118 on the display unit 112.

The contract processing unit 116 inputs information on the power sale amount into the power storage managing unit 119. When information on the power sale amount has been inputted, the power storage managing unit 119 limits the amount of discharging so that the stored amount of power in the power storage apparatus 102 does not fall below the power sale amount. For example, if a period for which reverse flow is permitted (hereinafter, "reverse flow period") has been decided, the power storage managing unit 119 carries out control during the reverse flow period so that the stored amount of power in the power storage apparatus 102 does not fall below the power sale amount. Also, if a reverse flow period has not been decided, the power storage managing unit 119 carries out control so that the stored amount of power in the power storage apparatus 102 does not fall below the power sale amount until the reverse flow is carried out. Note that if a plurality of power sale contracts are present, the power storage managing unit 119 calculates the total of the power sale amounts for all the power sale contracts and carries out control so that the stored amount of power in the power storage apparatus 102 does not fall below the total of the power sale amounts.

Also, if the IC card 40 has been passed over the reader/writer 118, the settlement processing unit 117 writes electronic money information equivalent to the power sale fee via the reader/writer 118 into the IC card 40. Note that the determination of whether the IC card 40 has been passed over can be realized for example using a framework where notification of the completion of authentication is inputted into the settlement processing unit 117 from the reader/writer 118 when mutual authentication between the IC card 40 and the reader/writer 118 has been completed. Also, if a write of electronic money information into the IC card 40 has failed, the settlement processing unit 117 notifies the contract processing unit 116 and the power storage managing unit 119 that the write has failed.

The power storage managing unit 119 that has received notification of a failed write cancels the control that limits the discharging amount so that the stored amount of power in the power storage apparatus 102 does not fall below the power sale amount. However, if there are a plurality of power sale contracts, the power storage managing unit 119 calculates the total of the power sale amounts for all of the power sale contracts aside from the power sale contract for which the write has failed and carries out control so that the stored amount of power in the power storage apparatus 102 does not fall below such total of the power sale amounts. Meanwhile, the contract processing unit 116 that has received notification of a failed write deletes the contract information stored in the recording apparatus (not shown) and notifies the power sale settlement system 20 of the cancellation of the power sale contract.

Note that it is also possible to use a configuration where, if a write of electronic money information into the IC card 40 has failed, instead of having the power sale contract immediately cancelled, the user is urged to pass the IC card 40 over the reader/writer 118 again and the write process into the IC card 40 is carried out again. In this case, even if the write of the electronic money information into the IC card 40 failed, while the write process is being carried out again, the contract processing unit 116 does not delete the contract information and cancellation of the power sale contract with the power sale settlement system 20 is not carried out. In addition, the power storage managing unit 119 maintains the discharge control over the power storage apparatus 102 while the write process is being carried out again.

Once the write of electronic money information into the IC card 40 succeeds, the settlement processing unit 117 bills the power sale settlement system 20 for payment of the power sale fee. If a request for reverse flow has been received from the power sale settlement system 20, the power storage managing unit 119 discharges the amount of power that has been requested from the power storage apparatus 102 toward the power company 30. Once the reverse flow has been completed, the contract processing unit 116 holds information showing the difference between the power sale amount decided when the power sale contract was concluded and the amount of power that has reverse flowed in association with the contract information. If an amount of power that is equal to the power sale amount decided when the power sale contract was concluded has entirely reverse flowed, the contract processing unit 116 deletes the contract information. Note that if a reverse flow period has been set, the power storage managing unit 119 determines whether the date/time when a request for reverse flow was received is within the reverse flow period, and if the time is within the reverse flow period, carries out discharging of the power storage apparatus 102.

This completes the description of the functional configuration of the power management apparatus 105.

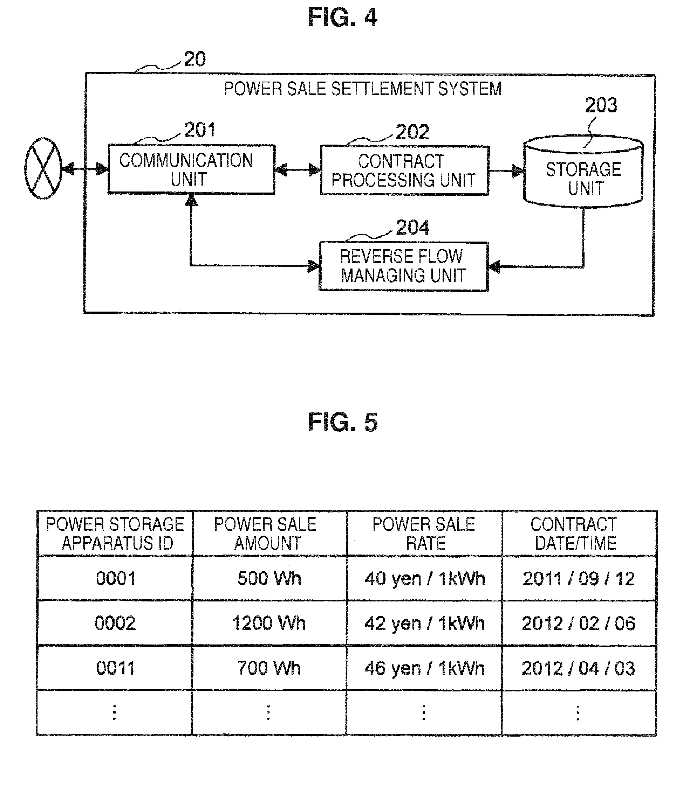

### 2-2-2: Power Sale Settlement System (FIG. 4, FIG. 5)

Next, the functional configuration of the power sale settlement system 20 will be described in more detail with reference to FIG. 4. FIG. 4 is an explanatory diagram showing an example functional configuration of the power sale settlement system 20.

As shown in FIG. 4, the power sale settlement system 20 mainly includes a communication unit 201, a contract processing unit 202, a storage unit 203, and a reverse flow managing unit 204.

The communication unit 201 is a communication device capable of communicating via a network with at least the power management apparatus 105. As examples, the communication unit 201 is a communication device that is capable of communication using a communication device such as a wireless LAN, a wired LAN, a telephone landline, a mobile telephone line, optical fibers, an ADSL, and power line communication. Via the communication unit 201, the contract processing unit 202, described later, acquires a power sale rate and exchanges information with the power management apparatus 105, for example. In addition, the reverse flow managing unit 204, described later, requests the reverse flow of power via the communication unit 201 to the power management apparatus 105.

The contract processing unit 202 receives contract information via the communication unit 201 from the power management apparatus 105 (see FIG. 3). Once the contract information has been received, the contract processing unit 202 calculates the power sale fee based on the power sale amount and the power sale rate included in the contract information. Note that the contract processing unit 202 may also be configured to acquire a power sale rate at the contract date/time presented by a power trading market or the power company 30 and to calculate the power sale fee based on the acquired power sale rate. When the power sale fee has been calculated, the contract processing unit 202 records contract information that associates the apparatus ID of the power management apparatus 105 or the apparatus ID of the power storage apparatus 102 that discharged the power when reverse flow was carried out, the power sale amount, the power sale rate or power sale fee, and the contract date/time in the storage unit 203 (see FIG. 5). Note that if a reverse flow period has been set, the contract processing unit 202 holds the contract information in association with the reverse flow period.

Once the contract information has been recorded in the storage unit 203, the contract processing unit 202 notifies, via the communication unit 201, the power management apparatus 105 of the conclusion of the power sale contract. The contract processing unit 202 may be configured so as to transmit information showing the contract content including the power sale fee to the power management apparatus 105 at such time. If cancellation of a power sale contract has been requested from the power management apparatus 105 after conclusion of the power sale contract, the contract processing unit 202 carries out a cancellation process for the power sale contract. At such time, the contract processing unit 202 specifies the apparatus ID of the power management apparatus 105 or the apparatus ID of the power storage apparatus 102 that requested deletion of the power sale contract and deletes contract information and the like corresponding to the specified apparatus ID from the storage unit 203. The contract processing unit 202 then notifies the power management apparatus 105 that the cancellation of the contract information has been completed.

If the concluding of a power sale contract has been completed and the write of the electronic money information into the IC card 40 succeeded, it becomes possible for the reverse flow managing unit 204 to request the power management apparatus 105 to carry out the reverse flow of power in response to requests from the power company 30. Note that if a reverse flow period has been set, it becomes possible to request the reverse flow of power to the power management apparatus 105 during such reverse flow period. If the reverse flow of power has been requested from the power company 30, the reverse flow managing unit 204 refers to the contract information and the like recorded in the storage unit 203 and determines whether it is possible to secure the amount of power for which reverse flow has been requested. If the total amount of power for which power sale contracts have been concluded is below the requested amount of power, the reverse flow managing unit 204 notifies the power company 30 that reverse flow is not possible.

Meanwhile, if the total amount of power for which power sale contracts have been concluded is above the amount of power requested from the power company 30, the reverse flow managing unit 204 requests a power management apparatus 105 that concluded a power sale contract to discharge the power stored in the power storage apparatus 102. Also, after reverse flow has been requested, the reverse flow managing unit 204 subtracts the amount of power for which reverse flow has been requested from the power sale amount and updates the contract information stored in the storage unit 203. The reverse flow managing unit 204 also deletes contract information corresponding to the power management apparatuses 105 where an amount of power equivalent to the power sale amount has reverse flowed. For example, in the case where the contract information shown in FIG. 5 has been stored in the storage unit 203, if the power management apparatus 105 for which apparatus ID=0001 has completed the reverse flow of 500Wh, the reverse flow managing unit 204 deletes the contract information corresponding to the apparatus ID=0001.

This completes the description of the functional configuration of the power sale settlement system 20.

This completes the description of the functional configurations of the power management apparatus 105 and the power sale settlement system 20 that construct the system according to the present embodiment.

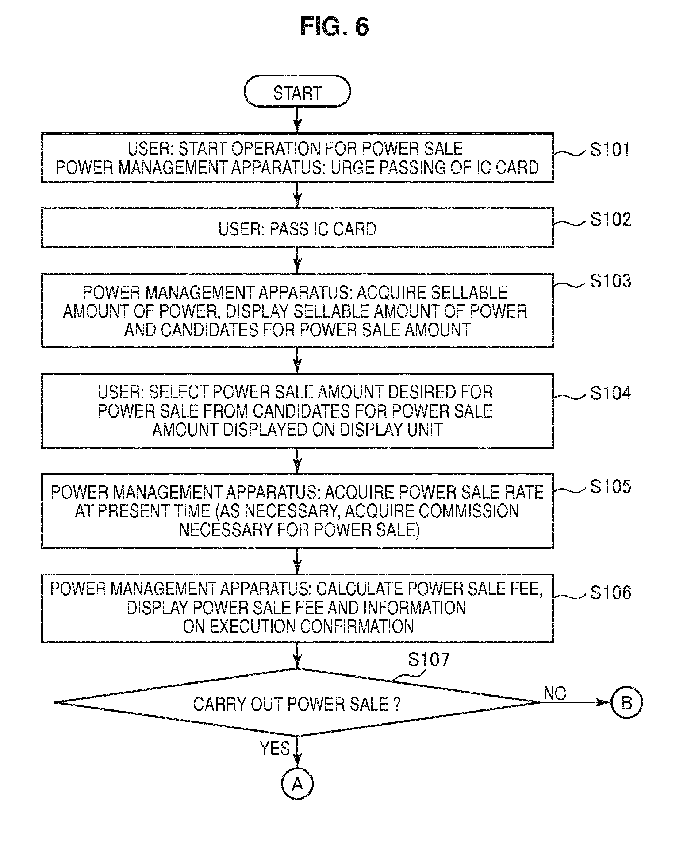

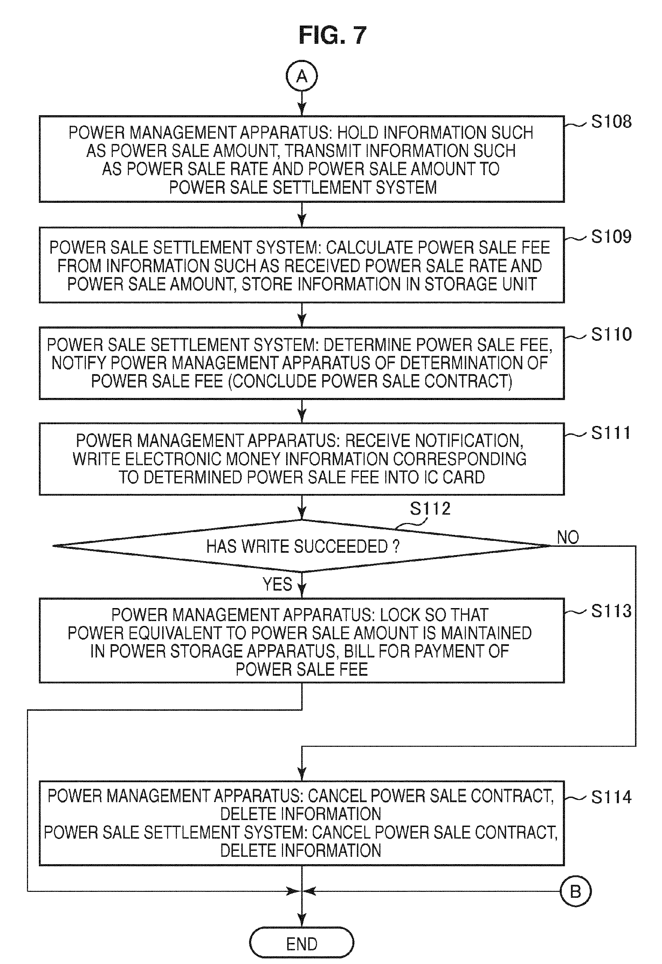

### 2-3: Sequence of Settlement Process (FIG. 6, FIG. 7)

Next, the processing sequence from the conclusion of a power sale contract to the settlement of the power sale fee will be described with reference to FIG. 6 and

FIG. 7. FIG. 6 and FIG. 7 are explanatory diagrams showing the processing sequence from the conclusion of a power sale contract to the settlement of the power sale fee.

Refer first to FIG. 6. As shown in FIG. 6, first, when a start operation for a power sale has been made by the user, the power management apparatus 105 urges the user to pass the IC card 40 over the reader/writer 118 (S101). Once the user has passed the IC card 40 over the reader/writer 118 (S102), the power management apparatus 105 acquires the sellable amount of power and displays the sellable amount of power and candidates for the power sale amount (S103). The sellable amount of power is calculated for example from the stored amount of power in the power storage apparatus 102 at the present time. As examples, the candidates for the power sale amount are displayed as 100%, 50%, 20%, and the like of the sellable amount of power or are displayed as 100Wh, 500Wh, 1000Wh, and the like. Although a framework where candidates for the power sale amount are displayed and selected by the user is given as an example here, it is also possible to use a framework where a numeric value of the power sale amount is directly inputted by the user, for example.

Once the sellable amount of power and candidates for the power sale amount have been displayed, the user selects the desired power sale amount for a power sale from the displayed candidates for the power sale amount (S104). Once the power sale amount has been selected, the power management apparatus 105 acquires the power sale rate at the present time (S105). At this time, as necessary the power management apparatus 105 acquires the commission which is necessary for the power sale. Once the power sale rate has been acquired, the power management apparatus 105 calculates the power sale fee by multiplying the acquired power sale rate and the power sale amount and displays the calculated power sale fee and information on execution confirmation (S106). After this, the power management apparatus 105 has the user confirm whether to carry out the power sale (S107). If the power sale is to be carried out, the power management apparatus 105 advances the processing to step A. Meanwhile, if the power sale is not to be carried out, the power management apparatus 105 advances the processing to step B and the series of processes ends.

As shown in FIG. 7, if the processing has advanced to step A in step S107, the power management apparatus 105 holds information (contract information) such as the power sale amount and transmits information on the power sale rate, the power sale amount, and the like to the power sale settlement system 20 (S108). Once information on the power sale rate, the power sale amount, and the like has been received, the power sale settlement system 20 calculates the power sale fee from the received information on the power sale rate, the power sale amount, and the like and stores information such as the power sale fee, the power sale rate, and the power sale amount in the storage unit 203 (S109). The power sale settlement system 20 then determines the power sale fee and notifies the power management apparatus 105 of determination of the power sale fee (the conclusion of a power sale contract; permission to write electronic money information) (S110).

Once notification from the power sale settlement system 20 has been received, the power management apparatus 105 writes electronic money information corresponding to the determined power sale fee via the reader/writer 118 into the IC card 40 (S111). Next, the power management apparatus 105 determines whether the electronic money information has been correctly written into the IC card 40 (S112). If the write of the electronic money information has succeeded, the power management apparatus 105 advances the processing to step S113. Meanwhile, if the write of the electronic money information has failed, the power management apparatus 105 advances the processing to step S114.

If the processing has advanced to step S113, the power management apparatus 105 is locked so that an amount of power equivalent to the power sale amount is maintained in the power storage apparatus 102 and bills the power sale settlement system 20 for payment of the power sale fee (S113). Once billing for the payment of the power sale fee has been completed, the processing sequence ends. Meanwhile, if the processing has advanced to step S114, the power management apparatus 105 notifies the power sale settlement system 20 of cancellation of the power sale contract and deletes information such as the contract information relating to the cancelled contract (S114). The power sale settlement system 20 that has received notification of cancellation of the power sale contract confirms the cancellation of the power sale contract and deletes information such as the contract information relating to the cancelled contract from the storage unit 203 (S114). Once cancellation of the power sale contract has been completed, the processing sequence ends.

This completes the description of the processing sequence from the conclusion of a power sale contract to the settlement of the power sale fee. Note that the power sale settlement system 20 carries out the same processing sequence with a plurality of power management apparatuses 105 to conclude power sale contracts. As a result, information such as that shown in FIG. 5 is accumulated in the storage unit 203 of the power sale settlement system 20.

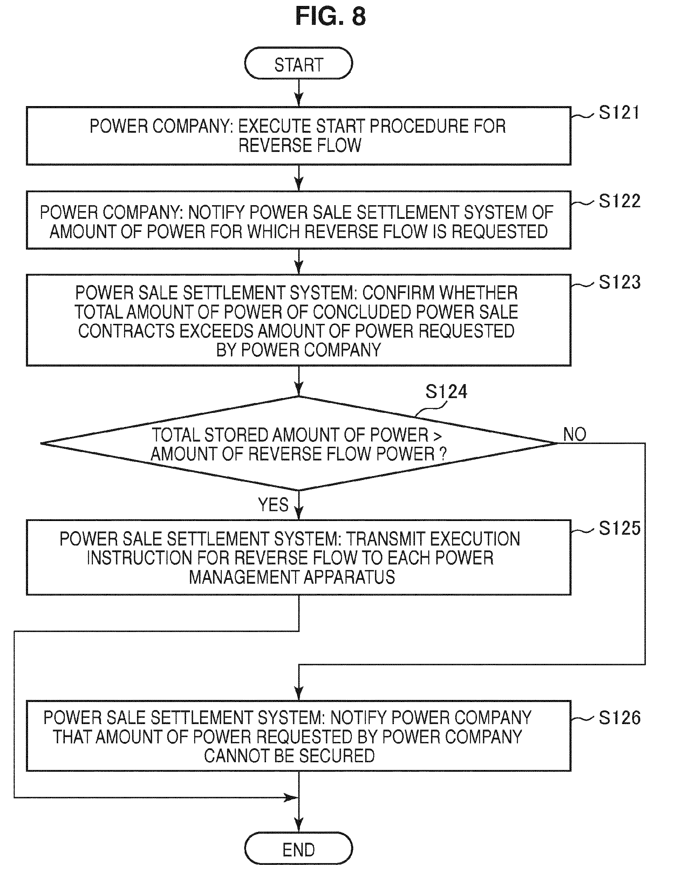

### 2-4: Sequence of Reverse Flow Process (FIG. 8)

Next, the processing sequence during reverse flow will be described with reference to FIG. 8. FIG. 8 is an explanatory diagram for explaining the processing sequence during reverse flow.

As shown in FIG. 8, the start procedure for reverse flow is carried out by the power company 30 (S121). First, the power company 30 notifies the power sale settlement system 20 of the amount of power for which reverse flow is requested (S122). On receiving notification from the power company 30, the power sale settlement system 20 refers to the information stored in the storage unit 203, totals the amount of power for which power sale contracts have been concluded, and confirms whether such total (hereinafter, "total stored amount of power") exceeds the amount of power (hereinafter, "amount of reverse flow power") requested by the power company 30 (S123, S124). If the total stored amount of power exceeds the amount of reverse flow power, the power sale settlement system 20 advances the processing to step S125. Meanwhile, if the total stored amount of power falls below the amount of reverse flow power, the power sale settlement system 20 advances the processing to step S126.

If the processing has advanced to step S125, the power sale settlement system 20 selects a power management apparatus 105 capable of carrying out reverse flow and transmits an execution instruction for reverse flow to the selected power management apparatus 105 (S125). The power management apparatus 105 that has received such execution instruction has power equal to the amount of power specified by the power sale settlement system 20 discharged from the power storage apparatus 102 to carry out reverse flow. Once the reverse flow has been completed, the processing sequence relating to reverse flow ends. Meanwhile, if the processing has advanced to step S126, the power sale settlement system 20 notifies the power company 30 that it is not possible to secure the amount of power requested by the power company 30 (S126). After such notification has been given, the processing sequence relating to reverse flow ends.

This completes the description of the processing sequence during reverse flow. Note that as the method of selecting the power management apparatuses 105 that actually carry out the reverse flow, one conceivable method selects in order of the oldest contract date/time. A method that selects the power management apparatuses 105 so as to minimize the number of power management apparatuses 105 necessary to secure the amount of reverse flow power is also conceivable. In addition, a method that selects the power management apparatuses 105 in order of the lowest power sale rate that has been contracted is also conceivable. It should be obvious that it is also possible to use a favorable selection method aside from such methods according to the situation.

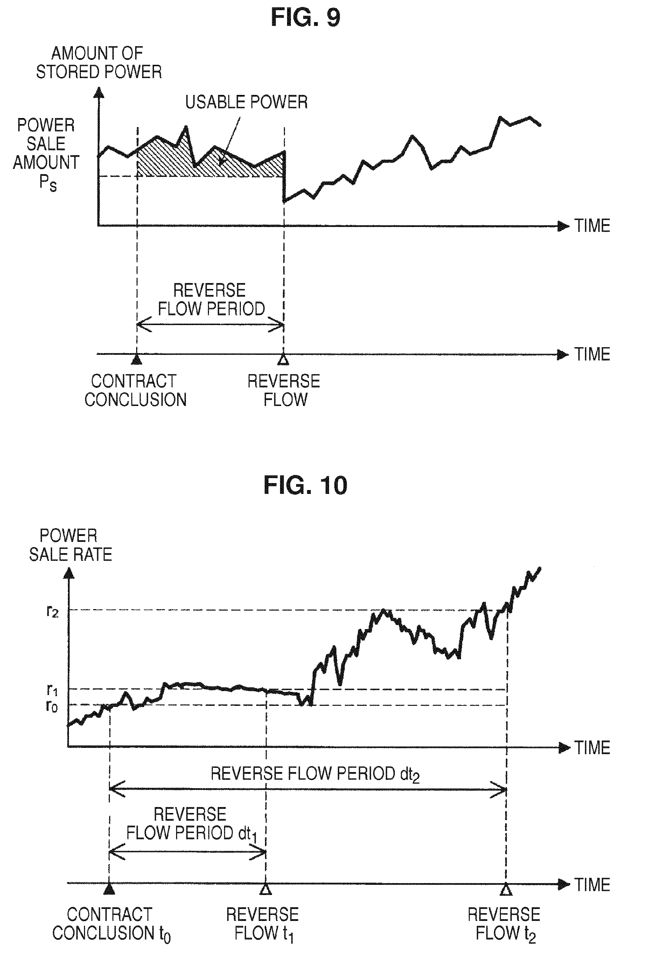

### 2-5: Reverse Flow Period (FIG. 9 to FIG. 13)

Although no detailed description of the selection method and the like of the reverse flow period has been given so far, supplementary description of the significance of setting the reverse flow period, the setting method, and the like will now be given here.

In the system according to the present embodiment, a power sale contract is signed by the power sale settlement system 20 (power trading management company) and the power management apparatus 105 (the home/business 10), and settlement (a write of electronic money information into the IC card 40) is completed in real time when the contract is concluded. Meanwhile, the transfer of power that is the product is carried out between the power management apparatus 105 (in reality, the power storage apparatus 102) and the power company 30. The transfer of power is also carried out in response to a request for reverse flow made by the power company 30. This means that the settlement period and the delivery period of the product become separated. Also, in the system according to the present embodiment, after conclusion of the power sale contract, power equivalent to the power sale amount is locked out of the amount of power stored in the power storage apparatus 102. For this reason, after conclusion of a power sale contract, it is necessary to maintain power equivalent to the power sale amount in the power storage apparatus 102 until the transfer of power is carried out.

Regarding the reverse flow period, if not stated otherwise, the reverse flow period is from the time of conclusion of the contract until the time at which reverse flow is carried out. As shown in FIG. 9, during the reverse flow period, the power management apparatus 105 maintains power equivalent to the power sale amount P_{S} in the power storage apparatus 102. For this reason, if the stored amount of power in the power storage apparatus 102 is expressed as P_{C}, during the reverse flow period, the amount of power that can be used in the home/business 10 is P_{C}-P_{S}. For example, if P_{S}=P_{S}, the power management apparatus 105 carries out control so that the power of the power storage apparatus 102 is not discharged. In this situation, it is necessary to cover the power consumed in the home/business 10 with power sold from the power company 30, which incurs an extra cost. For this reason, it is preferable to decide the power sale price having considered the risk of such extra cost being incurred or to set a favorable reverse flow period in a range where such risk is permissible.

Also, in a situation where the settlement period and the delivery period of the product are separated, it is also necessary to consider the risk due to fluctuations in the power sale rate. As one example, in the example in FIG. 10, there is large discrepancy in the power sale rate between a case where the reverse flow period has been set at dt₁ and a case where the reverse flow period has been set at dt₂. In the example in FIG. 10, the power management apparatus 105 carries out settlement with the power sale rate r₀ at the contract conclusion time to. This means that the loss dr₁ at the power management apparatus 105 when the reverse flow period was set at dt₁ is given as dr₁=(r₁-r₀) x power sale amount. Meanwhile, the loss dr₂ at the power management apparatus 105 when the reverse flow period was set at dt₂ is given as dr₂=(r₂-r₀) x power sale amount (where dr₂>>dr₁).

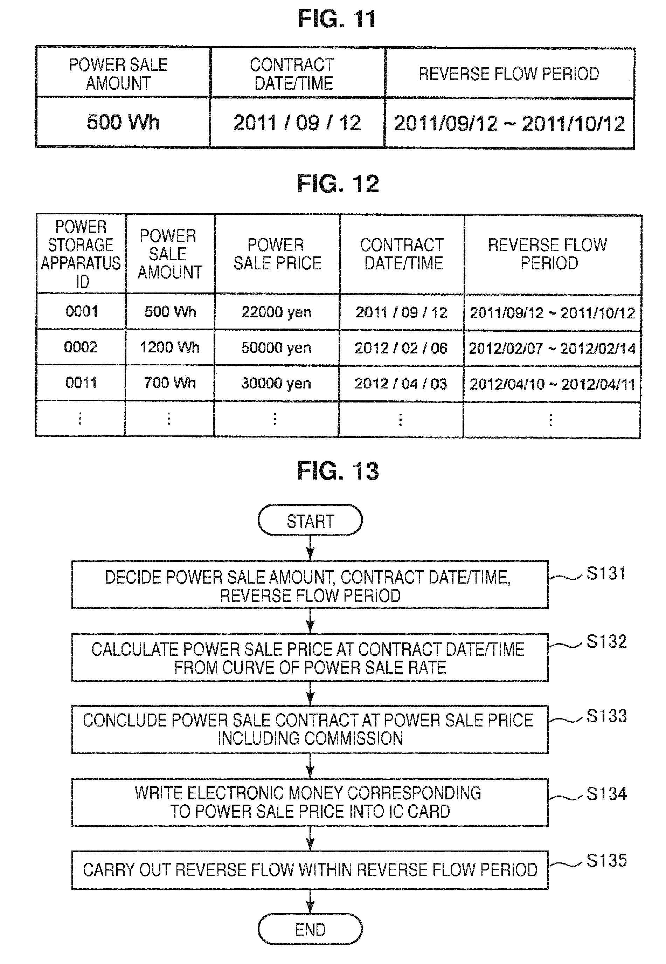

In the example in FIG. 10, since the power sale rate increases rapidly, by extending the reverse flow period, there is a large increase in the loss at the power management apparatus 105. Conversely, if there has been a large decrease in the power sale rate, by extending the reverse flow period, a large loss occurs at the power company 30. In this way, with a system where there is separation between the settlement period and the delivery period of the product, it is necessary to set the power sale price having considered the risk of fluctuation in the power sale rate and/or to set a favorable reverse flow period where it is possible to ignore the risk of fluctuation in the power sale rate. To calculate a power sale price in accordance with such risk, it is necessary to decide the reverse flow period in advance at the time of conclusion of the contract. For this reason, if a reverse flow period is set, the reverse flow period is included in the contract information as shown in FIG. 11.

Note that although the start time of the reverse flow period is set here as the time of conclusion of the contract, it is also possible to set the start time at any arbitrary time. For example, as shown in FIG. 12, it is also possible to set the start time of the reverse flow period at a future date/time. In this case, since the risk of fluctuation in the power sale rate increases as the contract date/time and the start time of the reverse flow period become more separated, the power sale price becomes higher. Also, since the period for which power equivalent to the power sale amount is maintained in the power storage apparatus 102 increases as the reverse flow period becomes longer, the power sale price increases. Although the system according to the present embodiment has a configuration where discharging is locked after conclusion of a contract to maintain power equivalent to the power sale amount in the power storage apparatus 102, it is also possible to use a configuration where, in a case where the reverse flow period has been set in the future, locking is carried out at a time a predetermined period before the start time of the reverse flow period.

It is also possible to use a configuration where, in a situation where power equivalent to the power sale amount is not maintained in the power storage apparatus 102 during the reverse flow period or there is the risk of this occurring, the power management apparatus 105 receives transfer of power from the power company 30 or another power management apparatus 105. That is, the power management apparatus 105 may include a function for automatically performing reverse trading of power. With a system, like the system according to the present embodiment, where the transferring of compensation is carried out in real time at contract conclusion time independently of delivery of the product, in view of risk, it is preferable to provide a framework or the like for setting a delivery period of the product and automatic reverse trading. By providing such a framework, it becomes possible to buy and sell power easily and with peace of mind.

Here, the processing sequence from the decision to conclude a contract to execution of reverse flow will be described for the case where a reverse flow period has been set. FIG. 13 is an explanatory diagram showing the processing sequence from the decision to conclude a contract to execution of reverse flow for the case where a reverse flow period has been set.

As shown in FIG. 13, first, the power sale amount, contract date/time, and reverse flow period are decided (S131). Such deciding may be freely carried out at the power management apparatus 105 or may be carried out at the power management apparatus 105 based on candidates presented by the power company 30 and/or the power sale settlement system 20. Next, a power sale price that matches the contract conditions at the contract date/time is calculated from the present and past power sale rate (a curve of the power sale rate) (S 132). Such calculation of the power sale price may be carried out at the power management apparatus 105 or may be carried out at the power sale settlement system 20. It is also possible to use a configuration where the contract conditions are presented and calculation of the power sale price is entrusted to an external organization.

Next, the power management apparatus 105 and the power sale settlement system 20 confirm the power sale price including commission and the like and conclude a power sale contract at the confirmed power sale price (S133). After this, the power management apparatus 105 writes electronic money information corresponding to the power sale price decided by the concluded contract into the IC card 40 (S 134) and issues an invoice for payment of the power sale price. After this, if reverse flow has been requested from the power company 30, the power sale settlement system 20 selects a power management apparatus 105 which, in view of the reverse flow period, is capable of reverse flow and transmits an execution instruction for reverse flow to the selected power management apparatus 105 (S135). After this, the reverse flow is actually carried out and the processing sequence from the decision to conclude a contract to execution of reverse flow for the case where a reverse flow period has been set ends.

This completes the description of the reverse flow period. Note that it is arbitrary whether a reverse flow period is set. Also, an indication that reverse flow is to be carried out within a specified period from the date/time of the power sale contract may be set in advance by the contract. If such a specified period is sufficiently short, there is little danger of an increase in the risk described above, which makes it possible to simplify the system. Simplification of the system also contributes to a reduction in the cost of constructing the system and a reduction in the cost of the power management apparatus 105.

This completes the description of the first embodiment of the present technology. By using the framework according to the present embodiment, it becomes possible for power sales to use electronic money at a power sale rate that fluctuates in real time. It also becomes possible for a power company to use the power stored at households and businesses according to its own demand via a power trading management company without being conscious of the individual households and businesses. As a result, this contributes to promoting the spread of power generating equipment that uses renewable energy and the effective use of renewable energy.

### 3. Second Embodiment (Principal Agent in Settlement Process = Power Storage Apparatus)

Next, a second embodiment of the present technology will be described. The present embodiment relates to a framework where the power sale function of the power management apparatus 105 according to the first embodiment described above is incorporated into the power storage apparatus 102. By incorporating the power sale function in the power storage apparatus 102, it becomes unnecessary to separately provide the power management apparatus 105, which makes it possible to reduce the cost of introduction.

### 3-1: System Configuration (FIG. 14)

First, an example configuration of the system according to the present embodiment will be described with reference to FIG. 14. FIG. 14 is an explanatory diagram showing one example configuration of the system according to the present embodiment.

As shown in FIG. 14, the system according to the present embodiment mainly includes a power management system constructed in a home/business 10, a power sale settlement system 20 operated by a power trading management company, and a system of a power company 30. The power management system constructed at the home/business 10 includes a power generating apparatus 101, a power storage apparatus 102, a DC/AC convertor 103, a power switchboard 104, power consuming apparatuses 106, and the like. Note that the power storage apparatus 102 is connected via a network to the power sale settlement system 20. Also, the power sale settlement system 20 is connected via a network to the system of the power company 30.

Solar photovoltaic equipment (photovoltaic panels), wind power generating equipment, geothermal power generating equipment, solar thermal power generating equipment, tidal power generating equipment, and biomass power generating equipment are examples of the power generating apparatus 101. A storage battery, a capacitor, and a power storage system are examples of the power storage apparatus 102. In addition, a lithium-ion battery, a nickel-metal hydride battery, a lead-acid battery, and a NAS (sodium-sulfur) battery are examples of storage batteries. An electrolytic capacitor, a ceramic capacitor, and an electric double layer capacitor are examples of capacitors.

The power generated by the power generating apparatus 101 is supplied to the power storage apparatus 102 and is stored in the power storage apparatus 102. The power stored in the power storage apparatus 102 is supplied via the DC/AC convertor 103 to the power consuming apparatuses 106. As examples, the power consuming apparatuses 106 are electric appliances such as a household appliance, air conditioning equipment, an OA appliance, or a computer. The battery charger of an electric car or an electric bicycle is also one type of power consuming apparatus 106. Grid power lines that join the power company 30 to the home/business 10 are designed to carry AC current. For this reason, if there is reverse flow of power stored in the power storage apparatus 102 to the power company 30, it is necessary to convert the DC current outputted from the power storage apparatus 102 to an AC current using the DC/AC convertor 103.

Also, the amount of power of the reverse flow, the timing of the reverse flow, and the like are managed by the power storage apparatus 102. As examples, in accordance with a power sale contract concluded with the power sale settlement system 20, the power storage apparatus 102 carries out discharging in response to a request for reverse flow made by the power sale settlement system 20 and suppresses the amount of discharging so that the stored amount of power does not fall below an amount of power reserved for a power sale. The specific method for such charging and discharging control will be described in detail later. Note that the power storage apparatus 102 may be provided with a function for controlling charging and discharging to achieve a favorable stored amount of power based on time zone information such as day or night, environment information such as a weather forecast, and/or market information such as a power sale rate.

This completes the description of an example configuration of the system according to the present embodiment.

### 3-2: Apparatus Configuration (Power Storage Apparatus) (FIG. 15)

Next, the functional configuration of the power storage apparatus 102 will be described in more detail with reference to FIG. 15. FIG. 15 is an explanatory diagram showing an example functional configuration of the power storage apparatus 102.

As shown in FIG. 15, the power storage apparatus 102 mainly includes an audio output unit 151, a display unit 152, an information output unit 153, an input unit 154, a communication unit 155, a contract processing unit 156, a settlement processing unit 157, a reader/writer 158, a power storage managing unit 159, and a power storage unit 150. The contract processing unit 156 includes a rate acquiring unit 171 and a fee calculating unit 172. Note that the power storage unit 150 is a power storage device in which power is actually stored. It is also possible to use a configuration in which the function relating to power sales and the power storage device are separately formed and are connected to one another.

The audio output unit 151 is an audio device that outputs audio. The display unit 152 is a display device that displays information. As the display unit 152, it is possible to use a display device such as an LCD or an ELD. The information output unit 153 outputs information as audio using the audio output unit 151 and outputs information as images and text using the display unit 152. Examples of the information outputted by the information output unit 153 are the amount of power generated by the power generating apparatus 101, the amount of power stored in the power storage unit 150, a weather forecast, the power sale rate, information relating to a power sale contract, information used for operations (a GUI), the date/time, and the amount of consumed power.

Based on the information outputted by the information output unit 153, the user makes decisions relating to power sale contracts and makes settings relating to charging and discharging control of the power storage unit 150. At such time, the user inputs information into the power storage apparatus 102 using the input unit 154. As examples of the input unit 154, it is possible to use an input device such as a touch panel, a touch pad, a button or buttons, a lever or levers, a keyboard, a mouse, and a trackball. However, when a touch panel is used as the input unit 154, the display unit 152 and the input unit 154 are integrally formed. Note that when information is inputted via the input unit 154, the inputted information is inputted into the information output unit 153, the contract processing unit 156, and the like.

The communication unit 155 is a communication device that is capable of communicating via a network with at least the power sale settlement system 20. As examples, the communication unit 155 is a communication device that is capable of communication using a communication device such as a wireless LAN, a wired LAN, a telephone landline, a mobile telephone line, optical fibers, an ADSL, and power line communication. As examples, the information output unit 153 acquires a weather forecast and the power sale rate via the communication unit 155 and displays on the display unit 152. Also, the contract processing unit 156, described later, acquires the power sale rate and exchanges information with the power sale settlement system 20 via the communication unit 155. In addition, the settlement processing unit 157 and the power storage managing unit 159, described later also exchange information with the power sale settlement system 20 via the communication unit 155.

The contract processing unit 156 carries out processing for concluding a power sale contract with the power sale settlement system 20. When the user makes an operation to start selling power via the input unit 154, the contract processing unit 156 first uses the functions of the rate acquiring unit 171 to acquire the power sale rate at the present time via the communication unit 155 from a power acquisition market or the power company 30. The contract processing unit 156 displays the amount of sellable power and information urging the user to input the power sale amount on the display unit 152. As one example, the amount of sellable power is the amount of power produced by subtracting power sale amounts that have already been determined by power sale contracts from the stored amount of power in the power storage unit 150.

Once the user has inputted the power sale amount via the input unit 154, the contract processing unit 156 uses the functions of the fee calculating unit 172 to calculate the power sale fee based on the power sale rate and the power sale amount. Note that the contract processing unit 156 may be configured so as to use the functions of the fee calculating unit 172 to calculate the power sale fee by subtracting a commission to be paid to the power sale settlement system 20 or the power company 30 when power is sold. Once the power sale fee has been calculated, the contract processing unit 156 displays the calculated power sale fee on the display unit 152. The contract processing unit 156 may be configured to display the fee of the commission together with the power sale fee on the display unit 152 at such time. Also, the contract processing unit 156 requests the user to input whether to conclude a power sale contract at the power sale fee displayed on the display unit 152.

If the user has indicated the wish to conclude a power sale contract via the input unit 154, the contract processing unit 156 transmits contract information (see FIG. 3) including information such as the power sale amount, the power sale rate, and the contract date/time via the communication unit 155 to the power sale settlement system 20. If a response indicating the conclusion of a power sale contract with the content of the transmitted contract information has been received from the power sale settlement system 20, the contract processing unit 156 displays information showing that the concluding of a power sale contract has succeeded on the display unit 152 and stores the contract information transmitted to the power sale settlement system 20 in a recording apparatus (not shown). In addition, the contract processing unit 156 inputs information on the power sale fee into the settlement processing unit 157. The contract processing unit 156 then displays information urging the user to pass an IC card 40 over the reader/writer 158 on the display unit 152.

The contract processing unit 156 inputs information on the power sale amount into the power storage managing unit 159. When information on the power sale amount has been inputted, the power storage managing unit 159 limits the amount of discharging so that the stored amount of power in the power storage unit 150 does not fall below the power sale amount. For example, if a reverse flow period has been decided, the power storage managing unit 159 carries out control during the reverse flow period so that the stored amount of power in the power storage unit 150 does not fall below the power sale amount. Also, if a reverse flow period has not been decided, the power storage managing unit 159 carries out control so that the stored amount of power in the power storage unit 150 does not fall below the power sale amount until the reverse flow is carried out. Note that if a plurality of power sale contracts are present, the power storage managing unit 159 calculates the total of the power sale amounts for all the power sale contracts and carries out control so that the stored amount of power in the power storage unit 150 does not fall below the total of the power sale amounts.

Also, if the IC card 40 has been passed over the reader/writer 158, the settlement processing unit 157 writes electronic money information equivalent to the power sale fee via the reader/writer 158 into the IC card 40. Note that the determination of whether the IC card 40 has been passed over can be realized for example using a framework where notification of the completion of authentication is inputted into the settlement processing unit 157 from the reader/writer 158 when mutual authentication between the IC card 40 and the reader/writer 158 has been completed. Also, if a write of electronic money information into the IC card 40 has failed, the settlement processing unit 157 notifies the contract processing unit 156 and the power storage managing unit 159 that the write has failed.

The power storage managing unit 159 that has received notification of a failed write cancels the control that limits the discharging amount so that the stored amount of power in the power storage unit 150 does not fall below the power sale amount. However, if there are a plurality of power sale contracts, the power storage managing unit 159 calculates the total of the power sale amounts for all of the power sale contracts aside from the power sale contract for which the write has failed and carries out control so that the stored amount of power in the power storage unit 150 does not fall below such total of the power sale amounts. Meanwhile, the contract processing unit 156 that has received notification of a failed write deletes the contract information stored in the recording apparatus (not shown) and notifies the power sale settlement system 20 of the cancellation of the power sale contract.

Note that it is also possible to use a configuration where, if a write of electronic money information into the IC card 40 has failed, instead of having the power sale contract immediately cancelled, the user is urged to pass the IC card 40 over the reader/writer 158 again and the write process into the IC card 40 is carried out again. In this case, even if the write of the electronic money information into the IC card 40 failed, while the write process is being carried out again, the contract processing unit 156 does not delete the contract information and cancellation of the power sale contract with the power sale settlement system 20 is not carried out. In addition, the power storage managing unit 159 maintains the discharge control over the power storage apparatus 102 while the write process is being carried out again.

Once the write of electronic money information into the IC card 40 succeeds, the settlement processing unit 157 bills the power sale settlement system 20 for payment of the power sale fee. If a request for reverse flow has been received from the power sale settlement system 20, the power storage managing unit 159 discharges the amount of power that has been requested from the power storage unit 150 toward the power company 30. Once the reverse flow has been completed, the contract processing unit 156 holds information showing the difference between the power sale amount decided when the power sale contract was concluded and the amount of power that has reverse flowed in association with the contract information. If an amount of power that is equal to the power sale amount decided when the power sale contract was concluded has entirely reverse flowed, the contract processing unit 156 deletes the contract information. Note that if a reverse flow period has been set, the power storage managing unit 159 determines whether the date/time when a request for reverse flow was received is within the reverse flow period, and if the time is within the reverse flow period, carries out discharging of the power storage unit 150.

This completes the description of the functional configuration of the power storage apparatus 102. Note that the functional configuration of the power sale settlement system 20 is the same as in the first embodiment described above.

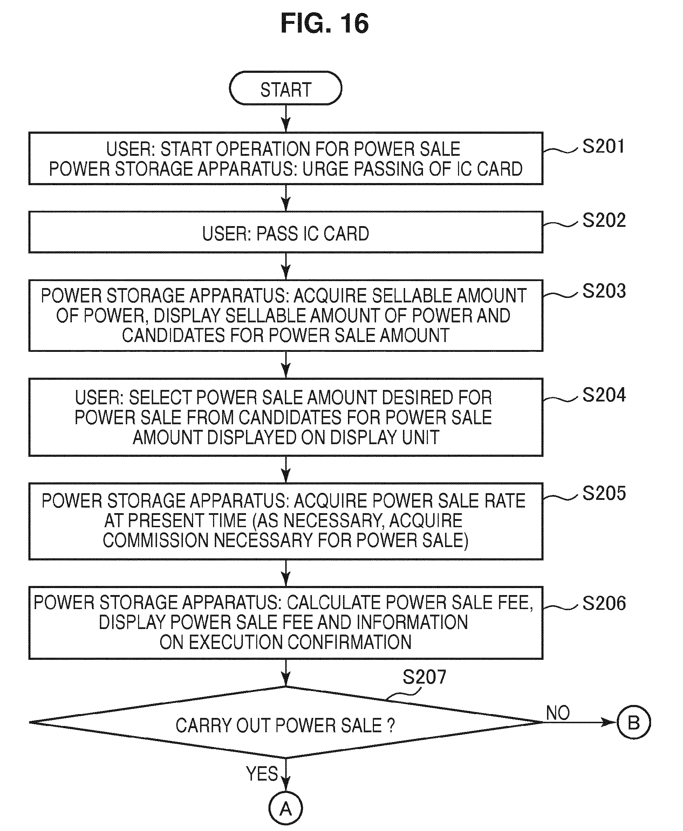

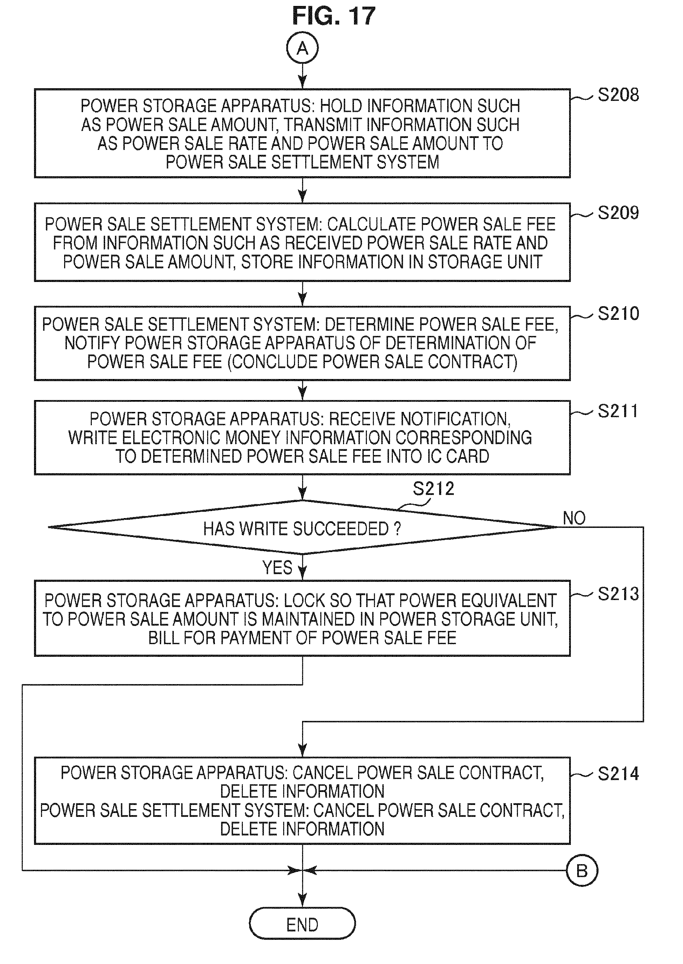

### 3-3: Sequence of Settlement Process (FIG. 16, FIG. 17)

Next, the processing sequence from the conclusion of a power sale contract to the settlement of the power sale fee will be described with reference to FIG. 16 and FIG. 17. FIG. 16 and FIG. 17 are explanatory diagrams showing the processing sequence from the conclusion of a power sale contract to the settlement of the power sale fee.

Refer first to FIG. 16. As shown in FIG. 16, first, when a start operation for a power sale has been made by the user, the power storage apparatus 102 urges the user to pass the IC card 40 over the reader/writer 158 (S201). Once the user has passed the IC card 40 over the reader/writer 158 (S202), the power storage apparatus 102 acquires the sellable amount of power and displays the sellable amount of power and candidates for the power sale amount (S203). The sellable amount of power is calculated for example from the stored amount of power in the power storage unit 150 at the present time. As examples, the candidates for the power sale amount are displayed as 100%, 50%, 20%, and the like of the sellable amount of power or are displayed as 100Wh, 500Wh, 1000Wh, and the like. Although a framework where candidates for the power sale amount are displayed and selected by the user is given as an example here, it is also possible to use a framework where a numeric value of the power sale amount is directly inputted by the user, for example.

Once the sellable amount of power and candidates for the power sale amount have been displayed, the user selects the desired power sale amount for a power sale from the displayed candidates for the power sale amount (S204). Once the power sale amount has been selected, the power storage apparatus 102 acquires the power sale rate at the present time (S205). At this time, as necessary the power storage apparatus 102 acquires the commission which is necessary for the power sale. Once the power sale rate has been acquired, the power storage apparatus 102 calculates the power sale fee by multiplying the acquired power sale rate and the power sale amount and displays the calculated power sale fee and information on execution confirmation (S206). After this, the power management apparatus 105 has the user confirm whether to carry out the power sale (S207). If the power sale is to be carried out, the power storage apparatus 102 advances the processing to step A. Meanwhile, if the power sale is not to be carried out, the power management apparatus 105 advances the processing to step B and the series of processes ends.

As shown in FIG. 17, if the processing has advanced to step A in step S207, the power storage apparatus 102 holds information (contract information) such as the power sale amount and transmits information on the power sale rate, the power sale amount, and the like to the power sale settlement system 20 (S208). Once information on the power sale rate, the power sale amount, and the like has been received, the power sale settlement system 20 calculates the power sale fee from the received information on the power sale rate, the power sale amount, and the like and stores information such as the power sale fee, the power sale rate, and the power sale amount in the storage unit 203 (S209). The power sale settlement system 20 then determines the power sale fee and notifies the power storage apparatus 102 of determination of the power sale fee (the conclusion of a power sale contract; permission to write electronic money information) (S210).

Once notification from the power sale settlement system 20 has been received, the power storage apparatus 102 writes electronic money information corresponding to the determined power sale fee via the reader/writer 158 into the IC card 40 (S211). Next, the power storage apparatus 102 determines whether the electronic money information has been correctly written into the IC card 40 (S212). If the write of the electronic money information has succeeded, the power storage apparatus 102 advances the processing to step S213. Meanwhile, if the write of the electronic money information has failed, the power storage apparatus 102 advances the processing to step S214.

If the processing has advanced to step S213, the power storage apparatus 102 is locked so that an amount of power equivalent to the power sale amount is maintained in the power storage unit 150 and bills the power sale settlement system 20 for payment of the power sale fee (S213). Once billing for the payment of the power sale fee has been completed, the series of the processing sequence ends. Meanwhile, if the processing has advanced to step S214, the power storage apparatus 102 notifies the power sale settlement system 20 of cancellation of the power sale contract and deletes information such as the contract information relating to the cancelled contract (S214). The power sale settlement system 20 that has received notification of cancellation of the power sale contract confirms the cancellation of the power sale contract and deletes information such as the contract information relating to the cancelled contract from the storage unit 203 (S214). Once cancellation of the power sale contract has been completed, the series of the processing sequence ends.

This completes the description of the processing sequence from the conclusion of a power sale contract to the settlement of the power sale fee. Note that the power sale settlement system 20 carries out the same processing sequence with a plurality of power storage apparatuses 102 to conclude power sale contracts. Note that if a power management apparatus 105 according to the first embodiment described above is included in the system, the power sale settlement system 20 carries out the same processing sequence with the power management apparatus 105 aside from the power storage apparatuses 102. As a result, information such as that shown in FIG. 5 is accumulated in the storage unit 203 of the power sale settlement system 20.

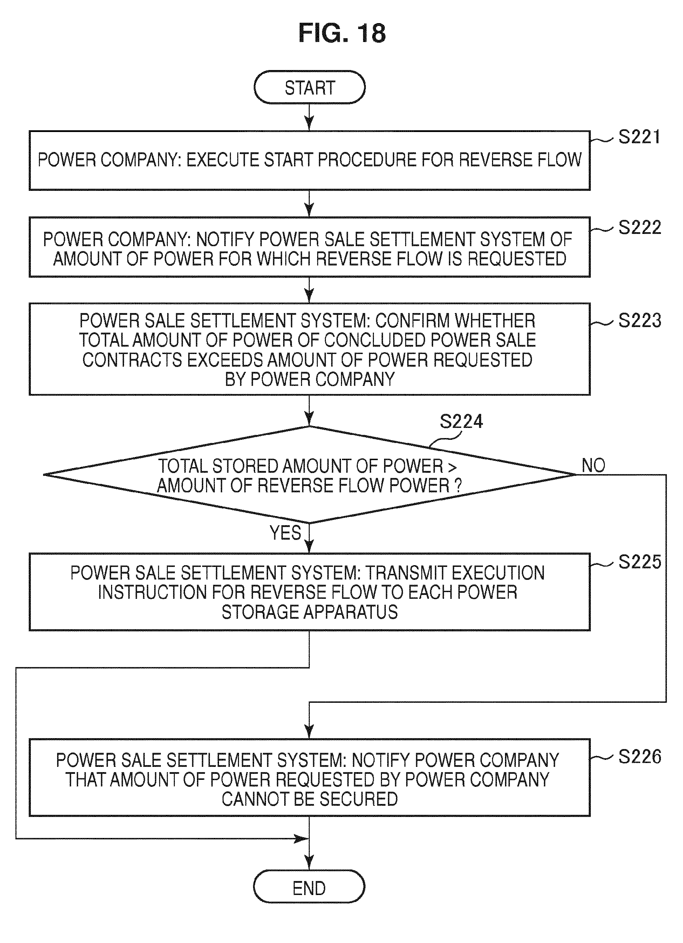

### 3-4: Sequence of Reverse Flow Process (FIG. 18)

Next, the processing sequence during reverse flow will be described with reference to FIG. 18. FIG. 18 is an explanatory diagram for explaining the processing sequence during reverse flow.

As shown in FIG. 18, the start procedure for reverse flow is carried out by the power company 30 (S221). First, the power company 30 notifies the power sale settlement system 20 of the amount of power for which reverse flow is requested (S222). On receiving notification from the power company 30, the power sale settlement system 20 refers to the information stored in the storage unit 203, totals the amount of power for which power sale contracts have been concluded, and confirms whether such total (the "total stored amount of power") exceeds the amount of power (the "amount of reverse flow power") requested by the power company 30 (S223, S224). If the total stored amount of power exceeds the amount of reverse flow power, the power sale settlement system 20 advances the processing to step S225. Meanwhile, if the total stored amount of power falls below the amount of reverse flow power, the power sale settlement system 20 advances the processing to step S226.

If the processing has advanced to step S225, the power sale settlement system 20 selects a power storage apparatus 102 capable of carrying out reverse flow and transmits an execution instruction for reverse flow to the selected power storage apparatus 102 (S225). The power storage apparatus 102 that has received such execution instruction has power equal to the amount of power specified by the power sale settlement system 20 discharged from the power storage unit 150 to carry out reverse flow. Once the reverse flow has been completed, the processing sequence relating to reverse flow ends. Meanwhile, if the processing has advanced to step S226, the power sale settlement system 20 notifies the power company 30 that it is not possible to secure the amount of power requested by the power company 30 (S226). After such notification has been given, the processing sequence relating to reverse flow ends.

This completes the description of the processing sequence during reverse flow. Note that as the method of selecting the power storage apparatuses 102 that actually carry out the reverse flow, one conceivable method selects in order of the oldest contract date/time. A method that selects the power storage apparatuses 102 so as to minimize the number of power storage apparatuses 102 necessary to secure the amount of reverse flow power is also conceivable. In addition, a method that selects the power storage apparatuses 102 in order of the lowest power sale rate that has been contracted is also conceivable. It should be obvious that it is also possible to use a favorable selection method aside from such methods according to the situation. Note that if a power management apparatus 105 according to the first embodiment described above is included in the system, the power sale settlement system 20 carries out the processing sequence relating to reverse flow by considering such power management apparatus 105 in addition to the power storage apparatuses 102.

This completes the description of the second embodiment of the present technology. By using the framework according to the present embodiment, it becomes possible for power sales to use electronic money at a power sale rate that fluctuates in real time. It also becomes possible for a power company to use the power stored at households and businesses according to its own demand via a power trading management company without being conscious of the individual households and businesses. As a result, this contributes to promoting the spread of power generating equipment that uses renewable energy and the effective use of renewable energy. In addition, by incorporating the power sale function in the power storage apparatus 102, it becomes unnecessary to separately provide the power management apparatus 105, which makes it possible to reduce the cost of introduction.

### 4. Third Embodiment (Principal Agent in Settlement Process = Electric Vehicle)

Next, a third embodiment of the present technology will be described. The present embodiment relates to a framework where the functions of the power storage apparatus 102 according to the second embodiment described above are incorporated into an electric vehicle 50. By making it possible to use the electric vehicle 50 as a power storage device, it is possible to efficiently manage power and to sell power with consideration to the environmental situation and/or the market situation, even without providing the high-performance power management apparatus 105 according to the first embodiment described above or the power storage apparatus 102 which at present is highly costly. As a result, the installation cost of various equipment is reduced, which lowers the barrier to introduction.

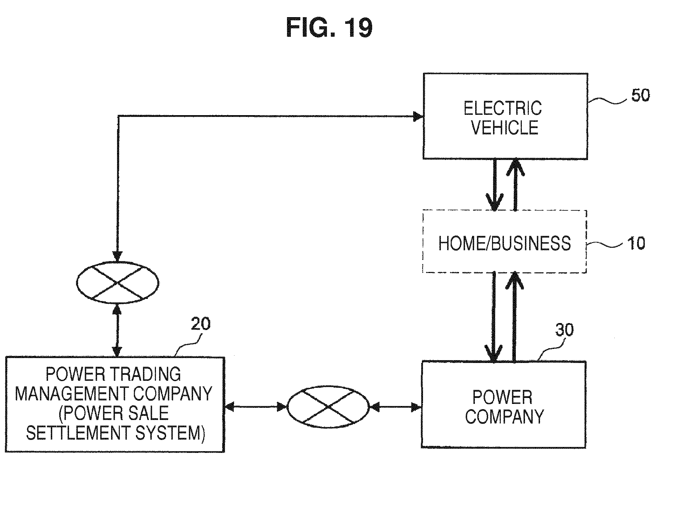

### 4-1: System Configuration (FIG. 19)

First, an example configuration of the system according to the present embodiment will be described with reference to FIG. 19. FIG. 19 is an explanatory diagram showing one example configuration of the system according to the present embodiment.

As shown in FIG. 19, the system according to the present embodiment mainly includes of a power management system constructed in a home/business 10, a power sale settlement system 20 operated by a power trading management company, a system of a power company 30, and the electric vehicle 50. Note that the electric vehicle 50 is connected via a network to the power sale settlement system 20. Also, the power sale settlement system 20 is connected via a network to the system of the power company 30. The power management system constructed at the home/business 10 includes the power generating apparatus 101, the DC/AC convertor 103, the power switchboard 104, and the power consuming apparatus 106 that were described in the first and second embodiments above. It should be obvious that the power storage apparatus 102 and the power management apparatus 105 may also be included.

In the case of the system according to the present embodiment, the exchanging of information relating to a power sale and operations made by the user are carried out at the electric vehicle 50. Also, the electric vehicle 50 is connected to the grid power lines of the power company 30 via the power lines of the home/business 10. This means that if the reverse flow of power is to be carried out, it is necessary for the electric vehicle 50 and the power lines of the home/business 10 to be connected. As one example, it is possible to use a configuration where a reverse flow period is set in advance and during the reverse flow period, a connection terminal that connects the electric vehicle 50 and power lines of the home/business 10 is locked. Alternatively, it is possible to use a configuration where, when the reverse flow period is near, a display or audio that urges the user to connect the electric vehicle 50 to the power lines of the home/business 10 is outputted from the electric vehicle 50.

In this way, although a variety of contrivances are necessary when the electric vehicle 50 is used, it is possible to use the electric vehicle 50 in the same way as when the power storage apparatus 102 according to the second embodiment described above is installed in the home/business 10.

This completes the description of an example configuration of the system according to the present embodiment.

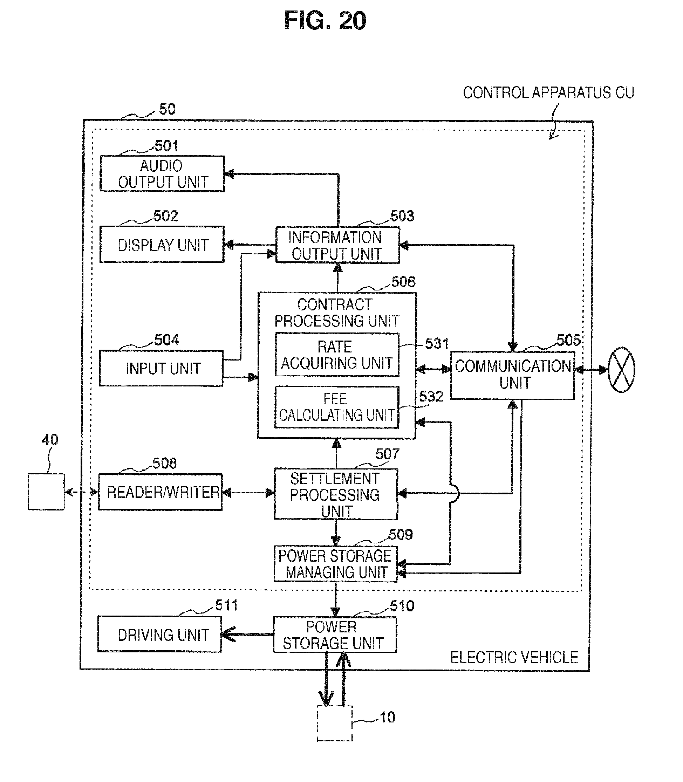

### 4-2: Apparatus Configuration (Electric Vehicle) (FIG. 20)

Next, the functional configuration of the electric vehicle 50 will be described in more detail with reference to FIG. 20. FIG. 20 is an explanatory diagram showing an example functional configuration of the electric vehicle 50.

As shown in FIG. 20, the electric vehicle 50 mainly includes a control apparatus CU, a power storage unit 510, and a driving unit 511. The power storage unit 510 is a power storage device in which power is actually stored. The driving unit 511 is a driving device that drives the electric vehicle 50 using the power stored in the power storage unit 510. The control apparatus CU includes an audio output unit 501, a display unit 502, an information output unit 503, an input unit 504, a communication unit 505, a contract processing unit 506, a settlement processing unit 507, a reader/writer 508, and a power storage managing unit 509. The contract processing unit 506 includes a rate acquiring unit 531 and a fee calculating unit 532.

The audio output unit 501 is an audio device that outputs audio. The display unit 502 is a display device that displays information. As the display unit 502, it is possible to use a display device such as an LCD or an ELD. The information output unit 503 outputs information as audio using the audio output unit 501 and outputs information as images and text using the display unit 502. Examples of the information outputted by the information output unit 503 are the amount of power stored in the power storage unit 510, a weather forecast, the power sale rate, information relating to a power sale contract, information used for operations (a GUI), the date/time, and the amount of consumed power.

Based on the information outputted by the information output unit 503, the user makes decisions relating to power sale contracts and makes settings relating to charging and discharging control of the power storage unit 510. At such time, the user inputs information using the input unit 504. As examples of the input unit 504, it is possible to use an input device such as a touch panel, a touch pad, a button or buttons, a lever or levers, a keyboard, a mouse, and a trackball. However, when a touch panel is used as the input unit 504, the display unit 502 and the input unit 504 are integrally formed. Note that when information is inputted via the input unit 504, the inputted information is inputted into the information output unit 503, the contract processing unit 506, and the like.

The communication unit 505 is a communication device that is capable of communicating via a network with at least the power sale settlement system 20. As examples, the communication unit 505 is a communication device that is capable of communication using a communication device such as a wireless LAN, a wired LAN, a telephone landline, a mobile telephone line, optical fibers, an ADSL, and power line communication. As examples, the information output unit 503 acquires a weather forecast and the power sale rate via the communication unit 505 and displays on the display unit 502. Also, the contract processing unit 506, described later, acquires the power sale rate and exchanges information with the power sale settlement system 20 via the communication unit 505. In addition, the settlement processing unit 507 and the power storage managing unit 509, described later, also exchange information with the power sale settlement system 20 via the communication unit 505.

The contract processing unit 506 carries out processing for concluding a power sale contract with the power sale settlement system 20. When the user makes an operation to start selling power via the input unit 504, the contract processing unit 506 first uses the functions of the rate acquiring unit 531 to acquire the power sale rate at the present time via the communication unit 505 from a power acquisition market or the power company 30. The contract processing unit 506 displays the amount of sellable power and information urging the user to input the power sale amount on the display unit 502. As one example, the amount of sellable power is the amount of power produced by subtracting power sale amounts that have already been determined by power sale contracts from the stored amount power of the power storage unit 510.

Once the user has inputted the power sale amount via the input unit 504, the contract processing unit 506 uses the functions of the fee calculating unit 532 to calculate the power sale fee based on the power sale rate and the power sale amount. Note that the contract processing unit 506 may be configured so as to use the functions of the fee calculating unit 532 to calculate the power sale fee by subtracting a commission to be paid to the power sale settlement system 20 or the power company 30 when power is sold. Once the power sale fee has been calculated, the contract processing unit 506 displays the calculated power sale fee on the display unit 502. The contract processing unit 506 may be configured to display the fee of the commission together with the power sale fee on the display unit 502 at such time. Also, the contract processing unit 506 requests the user to input whether to conclude a power sale contract at the power sale fee displayed on the display unit 502.

If the user has indicated the wish to conclude a power sale contract via the input unit 504, the contract processing unit 506 transmits contract information (see FIG. 3) including information such as the power sale amount, the power sale rate, and the contract date/time via the communication unit 505 to the power sale settlement system 20. If a response indicating the conclusion of a power sale contract with the content of the transmitted contract information has been received from the power sale settlement system 20, the contract processing unit 506 displays information showing that the concluding of a power sale contract has succeeded on the display unit 502 and stores the contract information transmitted to the power sale settlement system 20 in a recording apparatus (not shown). In addition, the contract processing unit 506 inputs information on the power sale fee into the settlement processing unit 507. The contract processing unit 506 then displays information urging the user to pass an IC card 40 over the reader/writer 508 on the display unit 502.

The contract processing unit 506 inputs information on the power sale amount into the power storage managing unit 509. When information on the power sale amount has been inputted, the power storage managing unit 509 limits the amount of discharging so that the stored amount of power in the power storage unit 510 does not fall below the power sale amount. For example, if a reverse flow period has been decided, the power storage managing unit 509 carries out control during the reverse flow period so that the stored amount of power in the power storage unit 510 does not fall below the power sale amount. Also, if a reverse flow period has not been decided, the power storage managing unit 509 carries out control so that the stored amount of power in the power storage unit 510 does not fall below the power sale amount until the reverse flow is carried out. Note that if a plurality of power sale contracts are present, the power storage managing unit 509 calculates the total of the power sale amounts for all the power sale contracts and carries out control so that the stored amount of power in the power storage unit 510 does not fall below the total of the power sale amounts.

Also, if the IC card 40 has been passed over the reader/writer 508, the settlement processing unit 507 writes electronic money information equivalent to the power sale fee via the reader/writer 508 into the IC card 40. Note that the determination of whether the IC card 40 has been passed over can be realized for example using a framework where notification of the completion of authentication is inputted into the settlement processing unit 507 from the reader/writer 508 when mutual authentication between the IC card 40 and the reader/writer 508 has been completed. Also, if a write of electronic money information into the IC card 40 has failed, the settlement processing unit 507 notifies the contract processing unit 506 and the power storage managing unit 509 that the write has failed.

The power storage managing unit 509 that has received notification of a failed write cancels the control that limits the discharging amount so that the stored amount of power in the power storage unit 510 does not fall below the power sale amount. However, if there are a plurality of power sale contracts, the power storage managing unit 509 calculates the total of the power sale amounts for all of the power sale contracts aside from the power sale contract for which the write has failed and carries out control so that the stored amount of power in the power storage unit 510 does not fall below such total of the power sale amounts. Meanwhile, the contract processing unit 506 that has received notification of a failed write deletes the contract information stored in the recording apparatus (not shown) and notifies the power sale settlement system 20 of the cancellation of the power sale contract.

Note that it is also possible to use a configuration where, if a write of electronic money information into the IC card 40 has failed, instead of having the power sale contract immediately cancelled, the user is urged to pass the IC card 40 over the reader/writer 508 again and the write process into the IC card 40 is carried out again. In this case, even if the write of the electronic money information into the IC card 40 failed, while the write process is being carried out again, the contract processing unit 506 does not delete the contract information and cancellation of the power sale contract with the power sale settlement system 20 is not carried out. In addition, the power storage managing unit 509 maintains the discharge control over the power storage unit 510 while the write process is being carried out again.

Once the write of electronic money information into the IC card 40 succeeds, the settlement processing unit 507 bills the power sale settlement system 20 for payment of the power sale fee. If a request for reverse flow has been received from the power sale settlement system 20, the power storage managing unit 509 discharges the amount of power that has been requested from the power storage unit 510 toward the power company 30. Once the reverse flow has been completed, the contract processing unit 506 holds information showing the difference between the power sale amount decided when the power sale contract was concluded and the amount of power that has reverse flowed in association with the contract information. If an amount of power that is equal to the power sale amount decided when the power sale contract was concluded has entirely reverse flowed, the contract processing unit 506 deletes the contract information. Note that if a reverse flow period has been set, the power storage managing unit 509 determines whether the date/time when a request for reverse flow was received is within the reverse flow period, and if the time is within the reverse flow period, carries out discharging of the power storage unit 510.

This completes the description of the functional configuration of the electric vehicle 50. Note that the functional configuration of the power sale settlement system 20 is the same as in the first embodiment described above. Also, although an electric car or an electric motorcycle is imagined as the electric vehicle 50 in the above description, it is also possible to provide the same framework for a hybrid car or the like.

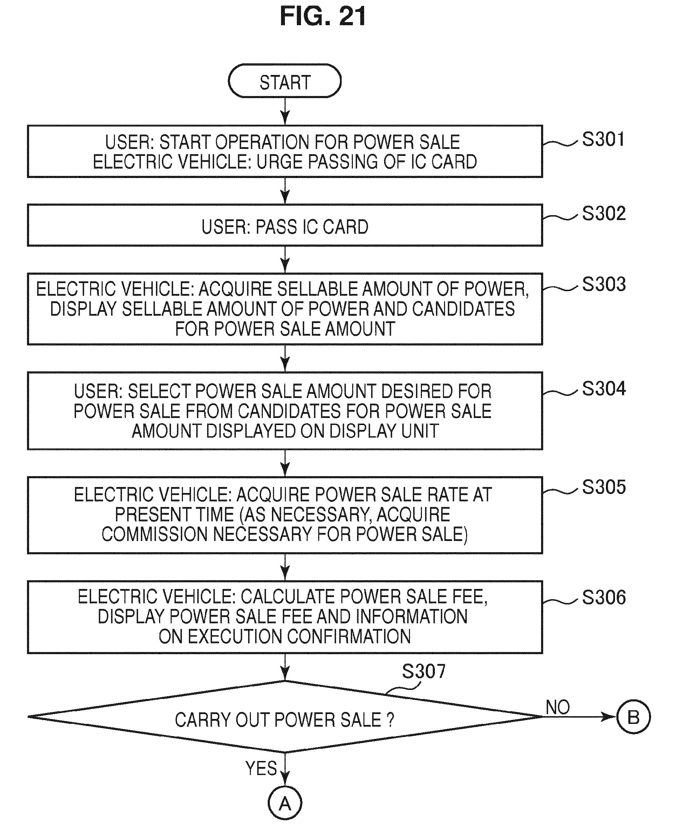

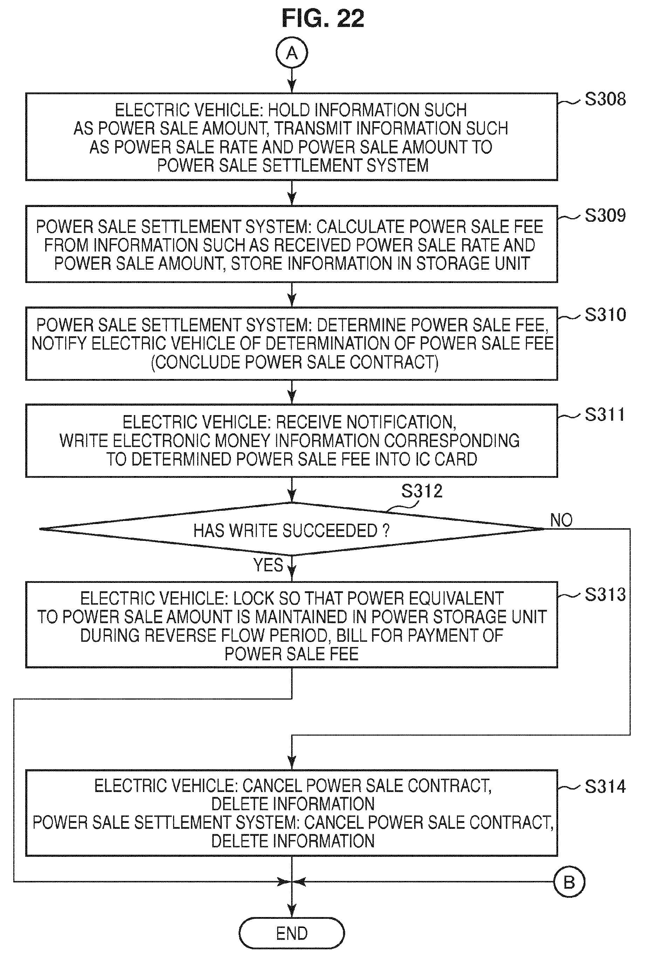

### 4-3: Sequence of Settlement Process (FIG. 21, FIG. 22)

Next, the processing sequence from the conclusion of a power sale contract to the settlement of the power sale fee will be described with reference to FIG. 21 and FIG. 22. FIG. 21 and FIG. 22 are explanatory diagrams showing the processing sequence from the conclusion of a power sale contract to the settlement of the power sale fee.

Refer first to FIG. 21. As shown in FIG. 21, first, when a start operation for a power sale has been made by the user, the electric vehicle 50 urges the user to pass the IC card 40 over the reader/writer 508 (S301). Once the user has passed the IC card 40 over the reader/writer 508 (S302), the electric vehicle 50 acquires the sellable amount of power and displays the sellable amount of power and candidates for the power sale amount (S303). The sellable amount of power is calculated for example from the stored amount of power in the power storage unit 510 at the present time. As examples, the candidates for the power sale amount are displayed as 100%, 50%, 20%, and the like of the sellable amount of power or are displayed as 100Wh, 500Wh, 1000Wh, and the like. Although a framework where candidates for the power sale amount are displayed and selected by the user is given as an example here, it is also possible to use a framework where a numeric value of the power sale amount is directly inputted by the user, for example.

Once the sellable amount of power and candidates for the power sale amount have been displayed, the user selects the desired power sale amount for a power sale from the displayed candidates for the power sale amount (S304). Once the power sale amount has been selected, the electric vehicle 50 acquires the power sale rate at the present time (S305). At this time, as necessary the electric vehicle 50 acquires the commission which is necessary for the power sale. Once the power sale rate has been acquired, the electric vehicle 50 calculates the power sale fee by multiplying the acquired power sale rate and the power sale amount and displays the calculated power sale fee and information on execution confirmation (S306). After this, the electric vehicle 50 has the user confirm whether to carry out the power sale (S307). If the power sale is to be carried out, the electric vehicle 50 advances the processing to step A. Meanwhile, if the power sale is not to be carried out, the electric vehicle 50 advances the processing to step B and the series of processes ends.

As shown in FIG. 22, if the processing has advanced to step A in step S307, the electric vehicle 50 holds information (contract information) such as the power sale amount and transmits information on the power sale rate, the power sale amount, and the like to the power sale settlement system 20 (S308). Once information on the power sale rate, the power sale amount, and the like has been received, the power sale settlement system 20 calculates the power sale fee from the received information on the power sale rate, the power sale amount, and the like and stores information such as the power sale fee, the power sale rate, and the power sale amount in the storage unit 203 (S309). The power sale settlement system 20 then determines the power sale fee and notifies the electric vehicle 50 of determination of the power sale fee (the conclusion of a power sale contract; permission to write electronic money information) (S310).

Once notification from the power sale settlement system 20 has been received, the electric vehicle 50 writes electronic money information corresponding to the determined power sale fee via the reader/writer 508 into the IC card 40 (S311). Next, the electric vehicle 50 determines whether the electronic money information has been correctly written into the IC card 40 (S312). If the write of the electronic money information has succeeded, the electric vehicle 50 advances the processing to step S213. Meanwhile, if the write of the electronic money information has failed, the electric vehicle 50 advances the processing to step S314.

If the processing has advanced to step S313, the electric vehicle 50 is locked so that an amount of power equivalent to the power sale amount is maintained and bills the power sale settlement system 20 for payment of the power sale fee (S313). Once billing for the payment of the power sale fee has been completed, the processing sequence ends. Meanwhile, if the processing has advanced to step S314, the electric vehicle 50 notifies the power sale settlement system 20 of cancellation of the power sale contract and deletes information such as the contract information relating to the cancelled contract (S314). The power sale settlement system 20 that has received notification of cancellation of the power sale contract confirms the cancellation of the power sale contract and deletes information such as the contract information relating to the cancelled contract from the storage unit 203 (S314). Once cancellation of the power sale contract has been completed, the processing sequence ends.

This completes the description of the processing sequence from the conclusion of a power sale contract to the settlement of the power sale fee. Note that the power sale settlement system 20 carries out the same processing sequence with a plurality of electric vehicles 50 to conclude power sale contracts. Note that if a power management apparatus 105 according to the first embodiment described above and a power storage apparatus 102 according to the second embodiment described above are included in the system, the power sale settlement system 20 carries out the same processing sequence with the power storage apparatus 102 and/or the power management apparatus 105 aside from the electric vehicles 50. As a result, information such as that shown in FIG. 5 is accumulated in the storage unit 203 of the power sale settlement system 20.

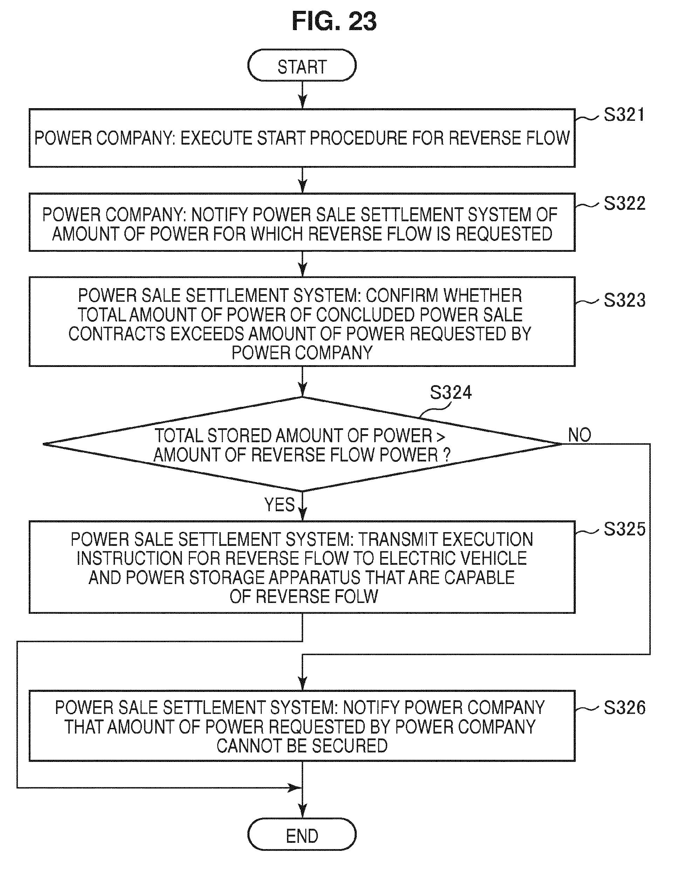

### 4-4: Sequence of Reverse Flow Process (FIG. 23)

Next, the processing sequence during reverse flow will be described with reference to FIG. 23. FIG. 23 is an explanatory diagram for explaining the processing sequence during reverse flow.

As shown in FIG. 23, the start procedure for reverse flow is carried out by the power company 30 (S321). First, the power company 30 notifies the power sale settlement system 20 of the amount of power for which reverse flow is requested (S322). On receiving notification from the power company 30, the power sale settlement system 20 refers to the information stored in the storage unit 203, totals the amount of power for which power sale contracts have been concluded, and confirms whether such total (the "total stored amount of power") exceeds the amount of power (the "amount of reverse flow power") requested by the power company 30 (S323, S324). If the total stored amount of power exceeds the amount of reverse flow power, the power sale settlement system 20 advances the processing to step S325. Meanwhile, if the total stored amount of power falls below the amount of reverse flow power, the power sale settlement system 20 advances the processing to step S326.

If the processing has advanced to step S325, the power sale settlement system 20 selects an electric vehicle 50 capable of carrying out reverse flow and transmits an execution instruction for reverse flow to the selected electric vehicle 50 (S325). The electric vehicle 50 that has received such execution instruction has power equal to the amount of power specified by the power sale settlement system 20 discharged from the power storage unit 510 to carry out reverse flow. Once the reverse flow has been completed, the processing sequence relating to reverse flow ends. Meanwhile, if the processing has advanced to step S326, the power sale settlement system 20 notifies the power company 30 that it is not possible to secure the amount of power requested by the power company 30 (S326). After such notification has been given, the processing sequence relating to reverse flow ends.

This completes the description of the processing sequence during reverse flow. Note that as the method of selecting the electric vehicle 50 that actually carries out the reverse flow, as an example, one conceivable method uses GPS or the like to select an electric vehicle 50 whose present location is the location of the home/business 10. Note that if a power management apparatus 105 according to the first embodiment described above and a power storage apparatus 102 according to the second embodiment described above are included in the system, the power sale settlement system 20 carries out the processing sequence relating to reverse flow by considering the power storage apparatus 102 and the power management apparatus 105 in addition to the electric vehicles 50.

This completes the description of the third embodiment of the present technology. By using the framework according to the present embodiment, it becomes possible for power sales to use electronic money at a power sale rate that fluctuates in real time. It also becomes possible to manage power and to sell power using the electric vehicle 50 without newly introducing equipment such as the power storage apparatus 102 according to the first and second embodiments described above, which suppresses the introduction cost and contributes to expansion of the market. As a result, this contributes to promoting the spread of power generating equipment that uses renewable energy and the effective use of renewable energy.

### 5: (Supplement) Example Configuration of IC Card

Here, supplementary description is given for an example configuration of an IC card.

The IC card includes a secure memory (hereinafter "storage region") that is accessible to a specified application installed in an electronic appliance or a reader/writer for which access authentication has succeeded. This storage region is composed of a plurality of areas, and as one example is divided into areas such as a settlement provider area and a business partner area. Such storage area also has a hierarchical area structure, with levels being provided for each service and/or each user information. In addition, an authentication key is set for each area and when accessing a given area, it is necessary for the reader/writer to carry out access authentication using the authentication key set for such area. This means that the information stored in each area is independently kept in a secure state.

### 5-1: Structure of Storage Region

Here, the structure of the storage region provided on the IC card will be described.

As described above, the storage region of an IC card has a hierarchical structure. As one example, in order from the top level, blocks such as a system definition block Sys, an area definition block A, and a service definition block Svc are provided as the levels. Note that user information U is stored in the service definition block Svc.

### System Definition Block Sys

As one example, a system code, system key information, and system key version information are stored in the system definition block Sys. The system code is a two-byte code expressing the manager of the system associated with the system definition block Sys. The system key information is key information used for mutual authentication carried out by a reader/writer and the IC card when accessing the system definition block Sys. The system key version information is version information used for generation management of the system key information. Based on such information, the system definition block Sys is associated with a system type (for example, a reader/writer type).

### Area Definition Block A

The area definition block A is a level positioned below the system definition block Sys. As one example, an area code, area key information, and area key version information are stored in the area definition block A. The area code is a code for identifying the area. An area is a unit expressing a group of services that are collectively managed for each type. Examples of the type of an area include a ticket barrier area used to manage a group of services relating to a ticket barrier and a settlement area used to manage a group of services relating to specified settlements.

Also, the area key information is key information used for mutual authentication carried out by a reader/writer and the IC card when accessing the area definition block A. The area key version information is information used in generation management of the area key information. Based on such information, the area definition block A is associated with an area type (as examples, ticket barrier or settlements).

### Service Definition Block Svc

The service definition block Svc is a level positioned below the area definition block A. As one example, a service code, service key information, and service key version information are stored in the service definition block Svc. The service code is a code for identifying the type of service. The expression "service" is a unit that expresses the type of user information U. As examples, the services include a ride section service used to manage a ride section used by a user and a settlement service used to manage settlement information (for example, remaining credit) used by the user.

Also, the service key information is key information used in mutual authentication carried out by a reader/writer and the IC card when accessing the service definition block Svc. The service key version information is information used in generation management of the service key information. Based on such information, the service definition block Svc is associated with a type of service (for example, ride section and remaining credit).

### User Information U

The user information U is specific information stored in the service definition block Svc. As one example, information expressing a specific ride section, such as "Boarding station: Shinjuku, Alighting station: Osaki", is included in the user information U corresponding to a travel section service. Information showing the specific remaining credit, such as "100 yen remaining", "100 points remaining", or "100", is included in the user information U corresponding to a settlement service. Such user information U is information actually read and written via a reader/writer.

As described above, by giving the storage region a hierarchical structure, storing key information for mutual authentication on each level, and requesting mutual authentication when each level is accessed, it is possible to safely manage information in system units, area units, and service units. Also, authentication control is possible in system units, area units, and service units, which makes selection and management of system managers, area managers, and service providers easy.

This completes the description of the structure of the storage region.

### 5-2: Circuit Configuration

Here, the circuit configuration of the IC card will be described in brief.

As one example, the IC card includes an antenna, a front end circuit, a modulator, a command regenerator, a clock regenerator, a control circuit, an encryption circuit, and a memory.

The antenna is constructed of a loop antenna and is capable of receiving commands and power by magnetically coupling to a loop antenna provided in the reader/writer. The front end circuit regenerates a DC power supply by rectifying a carrier wave sent from the reader/writer. The front end circuit also divides an acquired 13.56MHz carrier wave and inputs into the command regenerator and the clock regenerator. The command regenerator regenerates commands from the inputted carrier wave and inputs into the control circuit. The clock regenerator regenerates a clock for driving logic circuits from the inputted carrier wave and inputs into the control circuit. The front end circuit also supplies the regenerated power supply to the control circuit.

When the power supply has been supplied to all of the circuits, the control circuit drives the various circuits in accordance with the regenerated commands. Note that the data outputted from the control circuit is encrypted by the encryption circuit and stored in the memory. Meanwhile, if the encrypted data stored in the memory is to be transmitted, the front end circuit changes the load impedance at a power supply point of the antenna based on encrypted data modulated by the modulator, and changes the magnetic field induced by the antenna due to such changes. Due to such changes in magnetic field, changes in current flowing in the antenna of the reader/writer that is magnetically coupled are induced, thereby transferring the encrypted data.

This completes the description of the circuit configuration.

This also completes the description of the example configuration of an IC card.

### 6: Hardware Configuration Example (FIG. 24)

The control functions and computational processing functions of the respective structural elements according to the first to third embodiments of the present technology can be realized using the hardware configuration of an information processing apparatus shown in FIG. 24, for example.

That is, the function of each structural element can be realized by controlling the hardware shown in FIG. 24 using a computer program. Additionally, the mode of this hardware is arbitrary, and may be a personal computer, a mobile information terminal such as a mobile phone, a PHS or a PDA, a game machine, or various types of information appliances. Moreover, the PHS is an abbreviation for Personal Handy-phone System. Also, the PDA is an abbreviation for Personal Digital Assistant.

As shown in FIG. 24, this hardware mainly includes a CPU 902, a ROM 904, a RAM 906, a host bus 908, and a bridge 910. Furthermore, this hardware includes an external bus 912, an interface 914, an input unit 916, an output unit 918, a storage unit 920, a drive 922, a connection port 924, and a communication unit 926. Moreover, the CPU is an abbreviation for Central Processing Unit. Also, the ROM is an abbreviation for Read Only Memory. Furthermore, the RAM is an abbreviation for Random Access Memory.

The CPU 902 functions as an arithmetic processing unit or a control unit, for example, and controls entire operation or a part of the operation of each structural element based on various programs recorded on the ROM 904, the RAM 906, the storage unit 920, or a removable recording medium 928. The ROM 904 is means for storing, for example, a program to be loaded on the CPU 902 or data or the like used in an arithmetic operation. The RAM 906 temporarily or perpetually stores, for example, a program to be loaded on the CPU 902 or various parameters or the like arbitrarily changed in execution of the program.

These structural elements are connected to each other by, for example, the host bus 908 capable of performing high-speed data transmission. For its part, the host bus 908 is connected through the bridge 910 to the external bus 912 whose data transmission speed is relatively low, for example. Furthermore, the input unit 916 is, for example, a mouse, a keyboard, a touch panel, a button, a switch, or a lever. Also, the input unit 916 may be a remote control that can transmit a control signal by using an infrared ray or other radio waves.

The output unit 918 is, for example, a display device such as a CRT, an LCD, a PDP or an ELD, an audio output device such as a speaker or headphones, a printer, a mobile phone, or a facsimile, that can visually or auditorily notify a user of acquired information. Moreover, the CRT is an abbreviation for Cathode Ray Tube. The LCD is an abbreviation for Liquid Crystal Display. The PDP is an abbreviation for Plasma Display Panel. Also, the ELD is an abbreviation for ElectroLuminescence Display.

The storage unit 920 is a device for storing various data. The storage unit 920 is, for example, a magnetic storage device such as a hard disk drive (HDD), a semiconductor storage device, an optical storage device, or a magneto-optical storage device. The HDD is an abbreviation for Hard Disk Drive.

The drive 922 is a device that reads information recorded on the removable recording medium 928 such as a magnetic disk, an optical disk, a magneto-optical disk, or a semiconductor memory, or writes information in the removable recording medium 928. The removable recording medium 928 is, for example, a DVD medium, a Blu-ray medium, an HD-DVD medium, various types of semiconductor storage media, or the like. Of course, the removable recording medium 928 may be, for example, an electronic device or an IC card on which a non-contact IC chip is mounted. The IC is an abbreviation for Integrated Circuit.

The connection port 924 is a port such as an USB port, an IEEE1394 port, a SCSI, an RS-232C port, or a port for connecting an externally connected device 930 such as an optical audio terminal. The externally connected device 930 is, for example, a printer, a mobile music player, a digital camera, a digital video camera, or an IC recorder. Moreover, the USB is an abbreviation for Universal Serial Bus. Also, the SCSI is an abbreviation for Small Computer System Interface.

The communication unit 926 is a communication device to be connected to a network 932, and is, for example, a communication card for a wired or wireless LAN, Bluetooth (registered trademark), or WUSB, an optical communication router, an ADSL router, or various communication modems. The network 932 connected to the communication unit 926 is configured from a wire-connected or wirelessly connected network, and is the Internet, a home-use LAN, infrared communication, visible light communication, broadcasting, or satellite communication, for example. Moreover, the LAN is an abbreviation for Local Area Network. Also, the WUSB is an abbreviation for Wireless USB. Furthermore, the ADSL is an abbreviation for Asymmetric Digital Subscriber Line.

### 7: Conclusion

Finally, the technical concept according to the embodiments of the present technology will be summarized in brief. The technical concept described below can be applied to a variety of information processing apparatuses, such as a PC, a mobile telephone, a mobile game console, a mobile information terminal, an intelligent home appliance, and a car navigation system.

The functional configuration of the information processing apparatus described above can be expressed as described below. For example, the information processing apparatus described in (1) below has a function for writing electronic money information corresponding to the power sale compensation immediately after conclusion of the power sale contract into an IC card or an electronic appliance equipped with an IC card function. That is, by using the information processing apparatus, it is possible to receive compensation for the power sale in real time in the form of electronic money after a power sale has been carried out.

In this way, once it becomes possible to carry out payment of compensation immediately after an act of selling power, the user will experience the feeling of making a sale. Also, whenever an act of selling power is carried out, electronic money that has a monetary value which can actually be used will be received, so that the user can experience the joy of receiving compensation whenever a power sale act is carried out. As a result, carrying out acts of selling power becomes linked to the user's happiness, which means that acts of selling power will be actively carried out. Also, since the cost paid by the user when power is generated is zero in the case of green power, the user will have the illusion of obtaining monetary value at zero cost, which raises the hopes that green power will become actively sold. As a result, the active use of green power will be realized. Also, it is possible to sell power with a power sale rate in real time, and once it becomes possible to easily carry out acts of selling power, users will watch the power sale rate and carry out acts of selling power, leading to hopes that the power sale rate will be decided based on market principles. As a result, the power sale price will be optimized.

(1) An information processing apparatus including:
   a read/write unit configured so as to be capable of reading, via contactless communication, electronic money information from an IC card capable of storing the electronic money information or an electronic appliance equipped with functions of the IC card and of writing the electronic money information into the IC card or the electronic appliance; and
   a settlement processing unit configured to write electronic money information of a fee in accordance with a power sale amount via the read/write unit into the IC card or the electronic appliance immediately after conclusion of a power sale contract.
(2) The information processing apparatus according to (1), further including:
   a contract processing unit configured to carry out processing relating to the power sale contract for power stored in a specified power storage apparatus.
(3) The information processing apparatus according to (2), further including:
   a power storage managing unit configured to limit an amount of power outputted from the specified power storage apparatus after the conclusion of the power sale contract so that a state where power at least equal to the power sale amount is stored in the specified power storage apparatus is maintained until execution of the power sale contract is completed.
(4) The information processing apparatus according to any one of (1) to (3),
   wherein the contract processing unit includes:
   a rate acquiring unit configured to acquire a power sale rate when the power sale contract is concluded; and
   a fee calculating unit configured to calculate a fee in accordance with the power sale amount based on the power sale rate.
(5) The information processing apparatus according to (4),
   wherein the rate acquiring unit is operable when the power sale contract is concluded, to acquire one of a power sale rate presented by a power trading market, a power sale rate presented by another party in the power sale contract, and a power sale contract presented by a power company.
(6) The information processing apparatus according to (2) or (3),
   wherein the information processing apparatus is integrally formed with the specified power storage apparatus.
(7) The information processing apparatus according to (4),
   wherein the specified power storage apparatus stores power derived from renewable energy, and
   the rate acquiring unit is configured to acquire a power sale rate of green power.
(8) The information processing apparatus according to any one of (2), (3), or (6),
   wherein the contract processing unit is operable when carrying out processing relating to the power sale contract, to urge a user to pass the IC card or the electronic appliance over the read/write unit.
(9) The information processing apparatus according to any one of (1) to (8),
   wherein the settlement processing unit is operable when a write of the electronic money information into the IC card or the electronic appliance has failed, to request cancellation of the power sale contract.
(10) The information processing apparatus according to (2), further including:
   a power storage managing unit configured to limit an amount of power outputted from the specified power storage apparatus during a reverse flow period, which is set by the power sale contract, after the conclusion of the power sale contract so that a state where power at least equal to the power sale amount is stored in the specified power storage apparatus is maintained,
   wherein the reverse flow period is a period where it is possible for another party in the power sale contract to use power stored in the specified power storage apparatus with the power sale amount as a maximum.
(11) The information processing apparatus according to any one of (1) to (10),
   wherein the settlement processing unit is operable if a write of electronic money information into the IC card or the electronic appliance has been permitted from a power sale managing apparatus that is another party in the power sale contract when the power sale contract is concluded, to write, via the read/write unit, electronic money information of a fee in accordance with the power sale amount into the IC card or the electronic appliance.
(12) The information processing apparatus according to (2),
   wherein the specified power storage apparatus is a battery storing power for driving an electric vehicle, and
   the information processing apparatus is installed in the electric vehicle.
(13) A server apparatus including
   a contract processing unit configured to carry out processing relating to a power sale contract with an information processing apparatus, the information processing apparatus including a read/write unit configured so as to be capable of reading, via contactless communication, electronic money information from an IC card capable of storing the electronic money information or an electronic appliance equipped with functions of the IC card and of writing the electronic money information into the IC card or the electronic appliance, and a settlement processing unit configured to write electronic money information of a fee in accordance with a power sale amount via the read/write unit into the IC card or the electronic appliance immediately after conclusion of the power sale contract,
   wherein the contract processing unit is operable when the power sale contract has been concluded, to permit the information processing apparatus to carry out a write of electronic money information into the IC card or the electronic appliance.
(14) The server apparatus according to (13),
   wherein the contract processing unit is operable when the settlement processing unit has failed to write the electronic money information into the IC card or the electronic appliance, to cancel the power sale contract.
(15) A power trading settlement system including:
   an information processing apparatus including
   a read/write unit configured so as to be capable of reading, via contactless communication, electronic money information from an IC card capable of storing the electronic money information or an electronic appliance equipped with functions of the IC card and of writing the electronic money information into the IC card or the electronic appliance, and
   a settlement processing unit configured to write electronic money information of a fee in accordance with a power sale amount via the read/write unit into the IC card or the electronic appliance immediately after conclusion of a power sale contract; and
   a server apparatus including a contract processing unit configured to carry out processing relating to the power sale contract with the information processing apparatus and operable when the power sale contract has been concluded, to permit the information processing apparatus to carry out a write of electronic money information into the IC card or the electronic appliance.
(16) A power trading settlement method including:
   writing, via a read/write unit capable of reading, via contactless communication, electronic money information from an IC card capable of storing the electronic money information or an electronic appliance equipped with functions of the IC card and of writing the electronic money information into the IC card or the electronic appliance, electronic money information of a fee in accordance with a power sale amount into the IC card or the electronic appliance immediately after conclusion of a power sale contract.
(17) An information processing method including:
   writing, by way of an information processing apparatus including a read/write unit capable of reading, via contactless communication, electronic money information from an IC card capable of storing the electronic money information or an electronic appliance equipped with functions of the IC card and of writing the electronic money information into the IC card or the electronic appliance, electronic money information of a fee in accordance with a power sale amount via the read/write unit into the IC card or the electronic appliance immediately after conclusion of a power sale contract.
(18) An information processing method including:
   permitting, by way of a server apparatus that carries out processing relating to a power sale contract with an information processing apparatus including a read/write unit configured so as to be capable of reading, via contactless communication, electronic money information from an IC card capable of storing the electronic money information or an electronic appliance equipped with functions of the IC card and of writing the electronic money information into the IC card or the electronic appliance, and a settlement processing unit configured to write electronic money information of a fee in accordance with a power sale amount via the read/write unit into the IC card or the electronic appliance immediately after conclusion of the power sale contract, the information processing apparatus to carry out a write of electronic money information into the IC card or the electronic appliance when the power sale contract has been concluded.
(19) A program and a computer-readable recording medium having the program recorded thereon, the program causing a computer to achieve
   a read/write function so as to be capable of reading, via contactless communication, electronic money information from an IC card capable of storing the electronic money information or an electronic appliance equipped with functions of the IC card and of writing the electronic money information into the IC card or the electronic appliance, and
   a settlement processing function of writing electronic money information of a fee in accordance with a power sale amount using the read/write function into the IC card or the electronic appliance immediately after conclusion of a power sale contract.
(20) A program or a computer-readable recording medium having the program recorded thereon, the program being for causing a computer to achieve a contract processing function for carrying out processing relating to a power sale contract with an information processing apparatus, the information processing apparatus including a read/write unit configured so as to be capable of reading, via contactless communication, electronic money information from an IC card capable of storing the electronic money information or an electronic appliance equipped with functions of the IC card and of writing the electronic money information into the IC card or the electronic appliance, and a settlement processing unit configured to write electronic money information of a fee in accordance with a power sale amount via the read/write unit into the IC card or the electronic appliance immediately after conclusion of the power sale contract,
   wherein the contract processing function is operable when the power sale contract has been concluded, to permit the information processing apparatus to carry out a write of electronic money information into the IC card or the electronic appliance.

### Additional Comments

The power management apparatus 105, the power storage apparatus 102, and the control apparatus CU are examples of an "information processing apparatus". The power sale settlement system 20 described above is an example of a "server apparatus". The reader/writers 118, 158, 508 described above are examples of a "read/write unit".

The preferred embodiments of the present invention have been described above with reference to the accompanying drawings, whilst the present technology is not limited to the above examples, of course. A person skilled in the art may find various alterations and modifications within the scope of the appended claims, and it should be understood that they will naturally come under the technical scope of the present invention.

### Reference Signs List

- 10: home/business
- 101: power generating apparatus
- 102: power storage apparatus
- 103: DC/AC convertor
- 104: power switchboard
- 105: power management apparatus
- 106: power consuming apparatus
- 111, 151, 501: audio output unit
- 112, 152, 502: display unit
- 113, 153, 503: information output unit
- 114, 154, 504: input unit
- 115, 155, 505: communication unit
- 116, 156, 506: contract processing unit
- 117, 157, 507: settlement processing unit
- 118, 158, 508: reader/writer
- 119, 159, 509: power storage managing unit
- 131, 171, 531: rate acquiring unit
- 132, 172, 532: fee calculating unit
- 150, 510: power storage unit
- 511: driving unit
- 20: power sale settlement system
- 201: communication unit
- 202: contract processing unit
- 203: storage unit
- 204: reverse flow managing unit
- 30: power company
- 40: IC card
- 50: electric vehicle
- CU: control apparatus

## Claims

1. An information processing apparatus comprising:
a read/write unit configured so as to be capable of reading, via contactless communication, electronic money information from an IC card capable of storing the electronic money information or an electronic appliance equipped with functions of the IC card and of writing the electronic money information into the IC card or the electronic appliance; and
a settlement processing unit configured to write electronic money information of a fee in accordance with a power sale amount via the read/write unit into the IC card or the electronic appliance immediately after conclusion of a power sale contract.

2. The information processing apparatus according to claim 1, further comprising:
a contract processing unit configured to carry out processing relating to the power sale contract for power stored in a specified power storage apparatus.

3. The information processing apparatus according to claim 2, further comprising:
a power storage managing unit configured to limit an amount of power outputted from the specified power storage apparatus after the conclusion of the power sale contract so that a state where power at least equal to the power sale amount is stored in the specified power storage apparatus is maintained until execution of the power sale contract is completed.

4. The information processing apparatus according to claim 1,
wherein the contract processing unit includes:
a rate acquiring unit configured to acquire a power sale rate when the power sale contract is concluded; and
a fee calculating unit configured to calculate a fee in accordance with the power sale amount based on the power sale rate.

5. The information processing apparatus according to claim 4,
wherein the rate acquiring unit is operable when the power sale contract is concluded, to acquire one of a power sale rate presented by a power trading market, a power sale rate presented by another party in the power sale contract, and a power sale contract presented by a power company.

6. The information processing apparatus according to claim 2,
wherein the information processing apparatus is integrally formed with the specified power storage apparatus.

7. The information processing apparatus according to claim 4,
wherein the specified power storage apparatus stores power derived from renewable energy, and
the rate acquiring unit is configured to acquire a power sale rate of green power.

8. The information processing apparatus according to claim 2,
wherein the contract processing unit is operable when carrying out processing relating to the power sale contract, to urge a user to pass the IC card or the electronic appliance over the read/write unit.

9. The information processing apparatus according to claim 1,
wherein the settlement processing unit is operable when a write of the electronic money information into the IC card or the electronic appliance has failed, to request cancellation of the power sale contract.

10. The information processing apparatus according to claim 2, further comprising:
a power storage managing unit configured to limit an amount of power outputted from the specified power storage apparatus during a reverse flow period, which is set by the power sale contract, after the conclusion of the power sale contract so that a state where power at least equal to the power sale amount is stored in the specified power storage apparatus is maintained,
wherein the reverse flow period is a period where it is possible for another party in the power sale contract to use power stored in the specified power storage apparatus with the power sale amount as a maximum.

11. The information processing apparatus according to claim 1,
wherein the settlement processing unit is operable if a write of electronic money information into the IC card or the electronic appliance has been permitted from a power sale managing apparatus that is another party in the power sale contract when the power sale contract is concluded, to write, via the read/write unit, electronic money information of a fee in accordance with the power sale amount into the IC card or the electronic appliance.

12. The information processing apparatus according to claim 2,
wherein the specified power storage apparatus is a battery storing power for driving an electric vehicle, and
the information processing apparatus is installed in the electric vehicle.

13. A server apparatus comprising
a contract processing unit configured to carry out processing relating to a power sale contract with an information processing apparatus, the information processing apparatus including a read/write unit configured so as to be capable of reading, via contactless communication, electronic money information from an IC card capable of storing the electronic money information or an electronic appliance equipped with functions of the IC card and of writing the electronic money information into the IC card or the electronic appliance, and a settlement processing unit configured to write electronic money information of a fee in accordance with a power sale amount via the read/write unit into the IC card or the electronic appliance immediately after conclusion of the power sale contract,
wherein the contract processing unit is operable when the power sale contract has been concluded, to permit the information processing apparatus to carry out a write of electronic money information into the IC card or the electronic appliance.

14. The server apparatus according to claim 13,
wherein the contract processing unit is operable when the settlement processing unit has failed to write the electronic money information into the IC card or the electronic appliance, to cancel the power sale contract.

15. A power trading settlement system comprising:
an information processing apparatus including
a read/write unit configured so as to be capable of reading, via contactless communication, electronic money information from an IC card capable of storing the electronic money information or an electronic appliance equipped with functions of the IC card and of writing the electronic money information into the IC card or the electronic appliance, and
a settlement processing unit configured to write electronic money information of a fee in accordance with a power sale amount via the read/write unit into the IC card or the electronic appliance immediately after conclusion of a power sale contract; and
a server apparatus including a contract processing unit configured to carry out processing relating to the power sale contract with the information processing apparatus and operable when the power sale contract has been concluded, to permit the information processing apparatus to carry out a write of electronic money information into the IC card or the electronic appliance.

16. A power trading settlement method comprising:
writing, via a read/write unit capable of reading, via contactless communication, electronic money information from an IC card capable of storing the electronic money information or an electronic appliance equipped with functions of the IC card and of writing the electronic money information into the IC card or the electronic appliance, electronic money information of a fee in accordance with a power sale amount into the IC card or the electronic appliance immediately after conclusion of a power sale contract.

17. An information processing method comprising:
writing, by way of an information processing apparatus including a read/write unit capable of reading, via contactless communication, electronic money information from an IC card capable of storing the electronic money information or an electronic appliance equipped with functions of the IC card and of writing the electronic money information into the IC card or the electronic appliance, electronic money information of a fee in accordance with a power sale amount via the read/write unit into the IC card or the electronic appliance immediately after conclusion of a power sale contract.

18. An information processing method comprising:
permitting, by way of a server apparatus that carries out processing relating to a power sale contract with an information processing apparatus including a read/write unit configured so as to be capable of reading, via contactless communication, electronic money information from an IC card capable of storing the electronic money information or an electronic appliance equipped with functions of the IC card and of writing the electronic money information into the IC card or the electronic appliance, and a settlement processing unit configured to write electronic money information of a fee in accordance with a power sale amount via the read/write unit into the IC card or the electronic appliance immediately after conclusion of the power sale contract, the information processing apparatus to carry out a write of electronic money information into the IC card or the electronic appliance when the power sale contract has been concluded.
